# EUROPEAN PATENT APPLICATION

(11) **EP 4 783 541 A1**
(43) Date of publication of application: **29.07.2026**
(21) Application number: 24873997.1
(22) Date of filing: 07.06.2024
(51) Int. Cl.: H04L 45/745

(54) **PACKET FORWARDING METHOD AND APPARATUS BASED ON BUS NETWORK TECHNOLOGY, AND READABLE STORAGE MEDIUM**

(30) Priority: 07.10.2023 CN 202311290368; 29.12.2023 CN 202311861662
(71) Applicant: Huawei Cloud Computing Technologies Co., Ltd., Gui'an New District, Guizhou 550025 (CN)
(72) Inventor: CAO, Jincan, Guiyang, Guizhou 550025 (CN); CHEN, Lv, Guiyang, Guizhou 550025 (CN); LI, Jing, Guiyang, Guizhou 550025 (CN); PENG, Lin, Guiyang, Guizhou 550025 (CN); PAN, Qijun, Guiyang, Guizhou 550025 (CN); CHEN, Jinghuan, Guiyang, Guizhou 550025 (CN); DONG, Xuexuan, Guiyang, Guizhou 550025 (CN)
(74) Representative: Goddar, Heinz J.
(86) International application number: PCT/CN2024/098186
(87) International publication number: WO 2025/073178

(57) **Abstract**

This application discloses a bus network technology-based packet forwarding method and apparatus, and a readable storage medium, and belongs to the field of computer communication technologies. A computer system includes a bus switch, a plurality of processors, and a plurality of NICs. The bus switch is connected to the plurality of processors, and the bus switch is further connected to the plurality of NICs. The bus switch obtains a packet generated by a first processor in the plurality of processors, determines that a destination IP address of the packet is an IP address of a first NIC in the plurality of NICs, and forwards the packet to a second processor according to a routing rule. The second processor is a processor that is in the plurality of processors and that corresponds to the first NIC. In this application, a packet forwarding path is shortened, and a packet forwarding delay is reduced.

## Description

This application claims priorities to Chinese Patent Application No. 202311290368.1, filed on October 7, 2023 and entitled "PACKET FORWARDING METHOD, APPARATUS, AND DEVICE, AND COMPUTER-READABLE STORAGE MEDIUM", and to Chinese Patent Application No. 202311861662.3, filed on December 29, 2023 and entitled "BUS NETWORK TECHNOLOGY-BASED PACKET FORWARDING METHOD AND APPARATUS, AND READABLE STORAGE MEDIUM", both of which are incorporated herein by reference in their entireties.

### TECHNICAL FIELD

This application relates to the field of computer communication technologies, and in particular, to a bus network technology-based packet forwarding method and apparatus, and a readable storage medium.

### BACKGROUND

With the development of computer communication technologies, a computer system has more layout modes. For example, the computer system includes a processor, a network interface card (network interface card, NIC), and an upper-level switch. The processor is in communication with the upper-level switch via the NIC.

In a related technology, during packet forwarding in the foregoing computer system, after generating a packet, the processor sends the packet to the NIC, the NIC sends the packet to the upper-level switch, and then the upper-level switch implements packet forwarding.

However, a packet forwarding process in the related technology depends on the upper-level switch, resulting in a long packet forwarding path and a high delay.

### SUMMARY

This application provides a bus network technology-based packet forwarding method and apparatus, and a readable storage medium, to resolve problems of a long packet forwarding path and a high delay. The technical solutions provided in this application include the following aspects.

According to a first aspect, a bus network technology-based packet forwarding method is provided. A computer system includes a bus switch, a plurality of processors, and a plurality of NICs. The bus switch is connected to the plurality of processors, and the bus switch is further connected to the plurality of NICs. The bus switch obtains a packet generated by a first processor in the plurality of processors, determines that a destination internet protocol (internet protocol, IP) address of the packet is an IP address of a first NIC in the plurality of NICs, and forwards the packet to a second processor according to a routing rule. The second processor is a processor that is in the plurality of processors and that corresponds to the first NIC.

After the bus switch in this embodiment of this application obtains the packet generated by the first processor, if the destination IP address of the packet is the IP address of the first NIC, it is considered that the packet is a packet in the computer system. Therefore, the bus switch forwards the packet to the second processor according to the routing rule. For example, a process of forwarding the packet may not depend on an upper-level switch connected to the plurality of NICs in the computer system, so that a packet forwarding path is short and a packet forwarding delay is low.

In a possible implementation, the routing rule includes a correspondence between the destination IP address of the packet and the second processor, and forwarding the packet to the second processor according to the routing rule includes: forwarding the packet to the second processor based on the correspondence included in the routing rule.

In this implementation, the bus switch can directly forward the packet to the second processor according to the routing rule. For example, the bus switch forwards the packet to the second processor according to the routing rule through a bus between the bus switch and the second processor, without using another component in the computer system. A forwarding manner is simple and fast, packet forwarding efficiency is high, and a delay is low.

In a possible implementation, the routing rule includes a correspondence between the destination IP address of the packet and the first NIC, and forwarding the packet to the second processor according to the routing rule includes: forwarding the packet to the first NIC based on the correspondence included in the routing rule, to forward the packet to the second processor via the first NIC.

In this implementation, the bus switch can implement packet forwarding via the first NIC according to the routing rule, which is flexible. This application supports flexible selection of a proper routing rule, to adapt to different service requirements.

In a possible implementation, the destination IP address of the packet is a virtual destination IP address.

In this implementation, it is determined, by using the virtual destination IP address, that the packet is a packet in the computer system. This implementation has strong universal applicability and may be widely applied to the bus switch in the computer system, so that the bus network technology-based packet forwarding method provided in this application is applicable to a plurality of scenarios.

In a possible implementation, the IP address of the first NIC is a physical IP address; and determining that the destination internet protocol IP address of the packet is the IP address of the first NIC in the plurality of NICs includes: if the destination IP address of the packet is the virtual destination IP address, converting the virtual destination IP address of the packet into a physical destination IP address of the packet; and determining that the physical destination IP address of the packet is the physical IP address of the first NIC in the plurality of NICs.

When a form (virtual or physical) of the destination IP address carried in the packet is different from that of the IP address of the NIC, IP addresses in different forms are unified into IP addresses in a same form, to accurately determine that the physical destination IP address of the packet is the physical IP address of the first NIC in the plurality of NICs, to ensure packet forwarding efficiency and a success rate.

In a possible implementation, the bus switch includes a virtual switch; and determining that the destination internet protocol IP address of the packet is the IP address of the first NIC in the plurality of NICs includes: determining, via the virtual switch, that the destination IP address of the packet is the IP address of the first NIC in the plurality of NICs.

In this implementation, the virtual switch is deployed in the bus switch. After obtaining the packet via the bus switch, the virtual switch may determine that the packet is a packet in the computer system. The virtual switch may be in a form of software, and the bus switch can support the packet forwarding method provided in this application without a need to upgrade hardware of the bus switch.

In a possible implementation, the method further includes: determining that the destination IP address of the packet is not an IP address of any NIC in the plurality of NICs, and forwarding the packet to the upper-level switch that is in the computer system and that is connected to the plurality of NICs.

In this implementation, the packet is a packet outside the computer system. Therefore, the bus switch needs to forward the packet to the upper-level switch, for example, forward the packet to the upper-level switch via the NIC, so that the upper-level switch forwards the packet to outside the computer system in a timely manner. When the packet is a packet outside the computer system, normal packet forwarding is also ensured.

According to a second aspect, a bus network technology-based packet forwarding method is provided. The method is applied to a second NIC in a plurality of network interface card NICs in a computer system, the computer system further includes a bus switch and a plurality of processors, the plurality of NICs are connected to the bus switch, and the bus switch is further connected to the plurality of processors. In the method, the second NIC obtains a packet generated by a first processor in the plurality of processors, where the first processor corresponds to the second NIC; determines that a destination internet protocol IP address of the packet is an IP address of a first NIC in the plurality of NICs; and sends the packet, to enable the bus switch to forward the packet to a second processor according to a routing rule, where the second processor is a processor that is in the plurality of processors and that corresponds to the first NIC.

After the second NIC obtains the packet generated by the first processor, if the destination IP address of the packet is the IP address of the first NIC, it is considered that the packet is a packet in the computer system. Therefore, the packet is sent to the bus switch, to enable the bus switch to forward the packet to the second processor according to the routing rule without depending on a component like an upper-level switch. Therefore, a packet forwarding path is short, and a forwarding delay is low.

In a possible implementation, the routing rule includes a correspondence between the destination IP address of the packet and the second processor, and the routing rule is used by the bus switch to forward the packet to the second processor based on the correspondence.

In this implementation, after the second NIC sends the packet to the bus switch, the bus switch may quickly forward the packet to the second processor according to the routing rule, for example, forward the packet to the second processor through a bus. The forwarding manner is simple and fast, packet forwarding efficiency is high and a delay is low.

In a possible implementation, the routing rule includes a correspondence between the destination IP address of the packet and the first NIC, and the routing rule is used by the bus switch to forward the packet to the first NIC based on the correspondence, to forward the packet to the second processor via the first NIC.

In this implementation, the bus switch can implement packet forwarding via the first NIC, which is flexible.

In a possible implementation, the destination IP address of the packet is a virtual destination IP address.

It is determined, by using the virtual destination IP address carried in the packet, that the packet is a packet in the computer system. This implementation has strong universal applicability, so that the bus network technology-based packet forwarding method provided in this application is applicable to a plurality of scenarios.

In a possible implementation, the IP address of the first NIC is a physical IP address; and determining that the destination internet protocol IP address of the packet is the IP address of the first NIC in the plurality of NICs includes: if the destination IP address of the packet is the virtual destination IP address, converting the virtual destination IP address of the packet into a physical destination IP address of the packet; and determining that the physical destination IP address of the packet is the physical IP address of the first NIC in the plurality of NICs.

By converting a form of the destination IP address, whether the packet is a packet in the computer system can be determined when a form of the destination IP address carried in the packet is different from a form of the IP address of the first NIC, which is flexible.

In a possible implementation, the second NIC includes a virtual switch; and determining that the destination internet protocol IP address of the packet is the IP address of the first NIC in the plurality of NICs includes: determining, via the virtual switch, that the destination IP address of the packet is the IP address of the first NIC in the plurality of NICs.

The second NIC determines, via the virtual switch, whether the packet is a packet in the computer system. This helps improve determining efficiency and shorten a packet forwarding delay.

In a possible implementation, the method further includes: determining that the destination IP address of the packet is an IP address other than an IP address of any NIC in the plurality of NICs, and forwarding the packet to an upper-level switch connected to the plurality of NICs.

In this implementation, the packet is a packet outside the computer system, and therefore the packet needs to be forwarded to the upper-level switch, so that the upper-level switch forwards the packet to outside the computer system, to ensure normal packet forwarding.

According to a third aspect, a bus network technology-based packet forwarding method is provided. The method is applied to a first processor in a plurality of processors in a computer system, the computer system further includes a bus switch and a plurality of NICs, the plurality of processors are connected to the bus switch, the bus switch is further connected to the plurality of NICs, and the method includes: generating a packet, determining that a destination IP address of the packet is an IP address of a first NIC in the plurality of NICs, and sending the packet, to enable the bus switch to forward the packet to a second processor according to a routing rule, where the second processor is a processor that is in the plurality of processors and that corresponds to the first NIC.

After the first processor generates the packet, if the destination IP address of the packet is the IP address of the first NIC, it is considered that the packet is a packet in the computer system. Therefore, the first processor sends the packet to the bus switch, to enable the bus switch to forward the packet according to the routing rule without depending on a component like an upper-level switch. Therefore, a packet forwarding path is short, and a forwarding delay is low.

In a possible implementation, the routing rule includes a correspondence between the destination IP address of the packet and the second processor, and the routing rule is used by the bus switch to directly forward the packet to the second processor based on the correspondence.

After the first processor sends the packet to the bus switch, the bus switch may quickly forward the packet to the second processor according to the routing rule, for example, forward the packet to the second processor through a bus, to ensure high efficiency of a packet forwarding process and shorten a packet forwarding delay.

In a possible implementation, the routing rule includes a correspondence between the destination IP address of the packet and the first NIC, and the routing rule is used by the bus switch to forward the packet to the first NIC based on the correspondence, to forward the packet to the second processor via the first NIC.

In this implementation, the bus switch can implement packet forwarding via the first NIC according to the routing rule, which is flexible. This application supports flexible selection of a proper routing rule, to adapt to different service requirements.

In a possible implementation, the destination IP address of the packet is a virtual destination IP address.

The virtual destination IP address has strong universal applicability, so that the bus network technology-based packet forwarding method provided in this application is applicable to a plurality of scenarios.

In a possible implementation, the IP address of the first NIC is a physical IP address. Determining that the destination internet protocol IP address of the packet is the IP address of the first NIC in the plurality of NICs includes: if the destination IP address of the packet is the virtual destination IP address, converting the virtual destination IP address of the packet into a physical destination IP address of the packet; and determining that the physical destination IP address of the packet is the physical IP address of the first NIC in the plurality of NICs.

When a form (virtual or physical) of the destination IP address carried in the packet is different from that of the IP address of the NIC, IP addresses in different forms are unified into IP addresses in a same form, to accurately determine that the physical destination IP address of the packet is the physical IP address of the first NIC in the plurality of NICs, and determine that the packet is a packet in the computer system, to quickly forward the packet, and ensure packet forwarding efficiency and a success rate.

In a possible implementation, the first processor includes a virtual switch. Determining that the destination internet protocol IP address of the packet is the IP address of the first NIC in the plurality of NICs includes: determining, via the virtual switch, that the destination IP address of the packet is the IP address of the first NIC in the plurality of NICs.

In this implementation, the virtual switch is deployed in the first processor, so that after generating the packet, the first processor can determine, via the virtual switch, that the packet is a packet in the computer system, to facilitate efficient packet forwarding.

In a possible implementation, the method further includes: determining that the destination IP address of the packet is an IP address other than an IP address of any NIC in the plurality of NICs, and forwarding the packet to the upper-level switch connected to the plurality of NICs.

In this implementation, the packet is a packet outside the computer system. Therefore, the packet needs to be forwarded to the upper-level switch. For example, the packet is forwarded to the upper-level switch via the bus switch and the NIC, so that the upper-level switch forwards the packet to outside the computer system, to ensure normal packet forwarding.

According to a fourth aspect, a bus network technology-based packet forwarding method is provided. The method is applied to a computer system. The computer system includes a bus switch, a plurality of processors, and a plurality of NICs. The method includes: A first processor in the plurality of processors generates a packet; the bus switch obtains the packet generated by the first processor; the bus switch determines that a destination IP address of the packet is an IP address of a first NIC in the plurality of NICs; and the bus switch forwards the packet to a second processor according to a routing rule, where the second processor is a processor that is in the plurality of processors and that corresponds to the first NIC. For possible implementations included in the steps performed by the bus switch, refer to the possible implementations corresponding to the first aspect.

According to a fifth aspect, a bus network technology-based packet forwarding method is provided. The method is applied to a computer system. The computer system includes a bus switch, a plurality of processors, and a plurality of NICs. The method includes: A first processor in the plurality of processors generates a packet; a second NIC in the plurality of NICs obtains the packet generated by the first processor, where the first processor corresponds to the second NIC; the second NIC determines that a destination IP address of the packet is an IP address of a first NIC in the plurality of NICs; and the second NIC sends the packet, to enable the bus switch to forward the packet to a second processor according to a routing rule, where the second processor is a processor that is in the plurality of processors and that corresponds to the first NIC. For possible implementations included in the steps performed by the second NIC, refer to the possible implementations corresponding to the second aspect.

According to a sixth aspect, a bus network technology-based packet forwarding method is provided. The method is applied to a computer system. The computer system includes a bus switch, a plurality of processors, and a plurality of NICs. The method includes: A first processor in the plurality of processors generates a packet, determines that a destination IP address of the packet is an IP address of a first NIC in the plurality of NICs, and sends the packet, to enable the bus switch to forward the packet to a second processor according to a routing rule, where the second processor is a processor that is in the plurality of processors and that corresponds to the first NIC. For possible implementations included in the steps performed by the first processor, refer to the possible implementations corresponding to the third aspect.

According to a seventh aspect, a bus network technology-based packet forwarding apparatus is provided. The apparatus includes:
an obtaining module, configured to obtain a packet generated by a first processor in a plurality of processors;
a determining module, configured to determine that a destination internet protocol IP address of the packet is an IP address of a first NIC in a plurality of NICs; and
a forwarding module, configured to forward the packet to a second processor according to a routing rule, where the second processor is a processor that is in the plurality of processors and that corresponds to the first NIC.

In a possible implementation, the routing rule includes a correspondence between the destination IP address of the packet and the second processor. The forwarding module is configured to forward the packet to the second processor based on the correspondence included in the routing rule.

In a possible implementation, the routing rule includes a correspondence between the destination IP address of the packet and the first NIC. The forwarding module is configured to forward the packet to the first NIC based on the correspondence included in the routing rule, to forward the packet to the second processor via the first NIC.

In a possible implementation, the destination IP address of the packet is a virtual destination IP address.

In a possible implementation, the IP address of the first NIC is a physical IP address. The determining module is configured to: if the destination IP address of the packet is the virtual destination IP address, convert the virtual destination IP address of the packet into a physical destination IP address of the packet; and determine that the physical destination IP address of the packet is the physical IP address of the first NIC in the plurality of NICs.

In a possible implementation, the bus switch includes a virtual switch. The determining module is configured to determine, via the virtual switch, that the destination IP address of the packet is the IP address of the first NIC in the plurality of NICs.

In a possible implementation, the determining module is further configured to determine that the destination IP address of the packet is an IP address other than an IP address of any NIC in the plurality of NICs; and the forwarding module is further configured to forward the packet to an upper-level switch connected to the plurality of NICs.

According to an eighth aspect, a bus network technology-based packet forwarding apparatus is provided. The apparatus is used in a second NIC in a plurality of network interface card NICs in a computer system, the computer system further includes a bus switch and a plurality of processors, the plurality of NICs are connected to the bus switch, the bus switch is further connected to the plurality of processors, and the apparatus includes:
an obtaining module, configured to obtain a packet generated by a first processor in the plurality of processors, where the first processor corresponds to the second NIC;
a determining module, configured to determine that a destination internet protocol IP address of the packet is an IP address of a first NIC in the plurality of NICs; and
a sending module, configured to send the packet, to enable the bus switch to forward the packet to a second processor according to a routing rule, where the second processor is a processor that is in the plurality of processors and that corresponds to the first NIC.

In a possible implementation, the routing rule includes a correspondence between the destination IP address of the packet and the second processor, and the routing rule is used by the bus switch to forward the packet to the second processor based on the correspondence.

In a possible implementation, the routing rule includes a correspondence between the destination IP address of the packet and the first NIC, and the routing rule is used by the bus switch to forward the packet to the first NIC based on the correspondence, to forward the packet to the second processor via the first NIC.

In a possible implementation, the destination IP address of the packet is a virtual destination IP address.

In a possible implementation, the IP address of the first NIC is a physical IP address.

The determining module is configured to: if the destination IP address of the packet is the virtual destination IP address, convert the virtual destination IP address of the packet into a physical destination IP address of the packet; and determine that the physical destination IP address of the packet is the physical IP address of the first NIC in the plurality of NICs.

In a possible implementation, the second NIC includes a virtual switch.

The determining module is configured to determine, via the virtual switch, that the destination IP address of the packet is the IP address of the first NIC in the plurality of NICs.

In a possible implementation, the determining module is further configured to determine that the destination IP address of the packet is an IP address other than an IP address of any NIC in the plurality of NICs; and the sending module is further configured to forward the packet to an upper-level switch connected to the plurality of NICs.

According to a ninth aspect, a bus network technology-based packet forwarding apparatus is provided. The apparatus is used in a first processor in a plurality of processors in a computer system, the computer system further includes a bus switch and a plurality of NICs, the plurality of processors are connected to the bus switch, the bus switch is further connected to the plurality of NICs, and the apparatus includes:
a generation module, configured to generate a packet;
a determining module, configured to determine that a destination IP address of the packet is an IP address of a first NIC in the plurality of NICs; and
a sending module, configured to send the packet, to enable the bus switch to forward the packet to a second processor according to a routing rule, where the second processor is a processor that is in the plurality of processors and that corresponds to the first NIC.

In a possible implementation, the routing rule includes a correspondence between the destination IP address of the packet and the second processor, and the routing rule is used by the bus switch to directly forward the packet to the second processor based on the correspondence.

In a possible implementation, the routing rule includes a correspondence between the destination IP address of the packet and the first NIC, and the routing rule is used by the bus switch to forward the packet to the first NIC based on the correspondence, to forward the packet to the second processor via the first NIC.

In a possible implementation, the destination IP address of the packet is a virtual destination IP address.

In a possible implementation, the IP address of the first NIC is a physical IP address. The determining module is configured to: if the destination IP address of the packet is the virtual destination IP address, convert the virtual destination IP address of the packet into a physical destination IP address of the packet; and determine that the physical destination IP address of the packet is the physical IP address of the first NIC in the plurality of NICs.

In a possible implementation, the first processor includes a virtual switch. The determining module is configured to determine, via the virtual switch, that the destination IP address of the packet is the IP address of the first NIC in the plurality of NICs.

In a possible implementation, the determining module is further configured to determine that the destination IP address of the packet is an IP address other than an IP address of any NIC in the plurality of NICs; and the sending module is further configured to forward the packet to an upper-level switch connected to the plurality of NICs.

According to a tenth aspect, a computer system is provided. The computer system includes a bus switch, a plurality of processors, and a plurality of NICs. A first processor in the plurality of processors is configured to generate a packet. The bus switch is configured to obtain the packet generated by the first processor, determine that a destination internet protocol IP address of the packet is an IP address of a first NIC in the plurality of NICs, and forward the packet to a second processor according to a routing rule, where the second processor is a processor that is in the plurality of processors and that corresponds to the first NIC.

According to an eleventh aspect, another computer system is provided. The computer system includes a bus switch, a plurality of processors, and a plurality of NICs. A first processor in the plurality of processors is configured to generate a packet. A second NIC in the plurality of NICs is configured to obtain the packet generated by the first processor, where the first processor corresponds to the second NIC, determine that a destination internet protocol IP address of the packet is an IP address of a first NIC in the plurality of NICs, and send the packet, to enable the bus switch to forward the packet to a second processor according to a routing rule. The second processor is a processor that is in the plurality of processors and that corresponds to the first NIC.

According to a twelfth aspect, another computer system is provided. The computer system includes a bus switch, a plurality of processors, and a plurality of NICs. A first processor in the plurality of processors is configured to generate a packet, determine that a destination IP address of the packet is an IP address of a first NIC in the plurality of NICs, and send the packet, to enable the bus switch to forward the packet to a second processor according to a routing rule. The second processor is a processor that is in the plurality of processors and that corresponds to the first NIC.

According to a thirteenth aspect, a bus switch is provided. The bus switch is configured to implement the bus network technology-based packet forwarding method provided in any one of the first aspect and the possible implementations of the first aspect.

According to a fourteenth aspect, a network interface card, that is, a NIC, is provided. The network interface card is configured to implement the bus network technology-based packet forwarding method provided in any one of the second aspect and the possible implementations of the second aspect.

According to a fifteenth aspect, a processor is provided. The processor is configured to implement the bus network technology-based packet forwarding method provided in any one of the third aspect and the possible implementations of the third aspect.

According to a sixteenth aspect, a bus network technology-based packet forwarding device is provided. The device includes a storage and a processor. The storage stores at least one computer instruction, and the at least one computer instruction is loaded and executed by the processor, to enable the bus network technology-based packet forwarding device to implement the bus network technology-based packet forwarding method provided in the foregoing aspects. For example, the bus network technology-based packet forwarding device includes but is not limited to a bus switch.

Optionally, there are one or more processors, and there are one or more storages.

Optionally, the storage and the processor may be integrated together, or the storage and the processor may be separately disposed.

According to a seventeenth aspect, a computer program or a computer program product is provided. The computer program or the computer program product includes computer instructions, and when the computer instructions are run by a computer, the computer is enabled to perform the bus network technology-based packet forwarding method provided in the foregoing aspects.

According to an eighteenth aspect, a computer-readable storage medium is provided. The computer-readable storage medium stores computer instructions. When the computer instructions are run on a computer, the bus network technology-based packet forwarding method provided in the foregoing aspects is performed by the computer.

According to a nineteenth aspect, a chip is provided, including a processor, configured to invoke, from a storage, and run instructions stored in the storage, to enable a computer in which the chip is installed to perform the bus network technology-based packet forwarding method provided in the foregoing aspects.

According to a twentieth aspect, another chip is provided, including an input interface, an output interface, a processor, and a storage. The input interface, the output interface, the processor, and the storage are connected by using an internal connection path. The processor is configured to execute code in the storage. When the code is executed, a computer in which the chip is installed performs the bus network technology-based packet forwarding method provided in the foregoing aspects.

It should be understood that, for technical effects achieved by the technical solutions provided in the fourth aspect to the twentieth aspect and the corresponding possible implementations of this application, refer to the foregoing descriptions of the technical effects achieved by the technical solutions provided in the first aspect to the third aspect and the corresponding possible implementations. Details are not described herein again.

### BRIEF DESCRIPTION OF DRAWINGS

FIG. 1 is a diagram of forwarding a packet in a related technology according to an embodiment of this application;
FIG. 2 is a diagram of a computer system according to an embodiment of this application;
FIG. 3 is a diagram of another computer system according to an embodiment of this application;
FIG. 4 is a diagram of forwarding a packet in another related technology according to an embodiment of this application;
FIG. 5 is a diagram of a bus network technology-based packet forwarding method according to an embodiment of this application;
FIG. 6 is a schematic flowchart of a bus network technology-based packet forwarding method according to an embodiment of this application;
FIG. 7 is a diagram of another bus network technology-based packet forwarding method according to an embodiment of this application;
FIG. 8 is a schematic flowchart of another bus network technology-based packet forwarding method according to an embodiment of this application;
FIG. 9 is a diagram of still another bus network technology-based packet forwarding method according to an embodiment of this application;
FIG. 10 is a schematic flowchart of still another bus network technology-based packet forwarding method according to an embodiment of this application;
FIG. 11 is a diagram of a structure of a bus network technology-based packet forwarding apparatus according to an embodiment of this application;
FIG. 12 is a diagram of another bus network technology-based packet forwarding structure according to an embodiment of this application;
FIG. 13 is a diagram of still another bus network technology-based packet forwarding structure according to an embodiment of this application; and
FIG. 14 is a diagram of a structure of a bus network technology-based packet forwarding device according to an embodiment of this application.

### DESCRIPTION OF EMBODIMENTS

Terms used in implementations of this application are only used to explain specific embodiments of this application, but are not intended to limit this application.

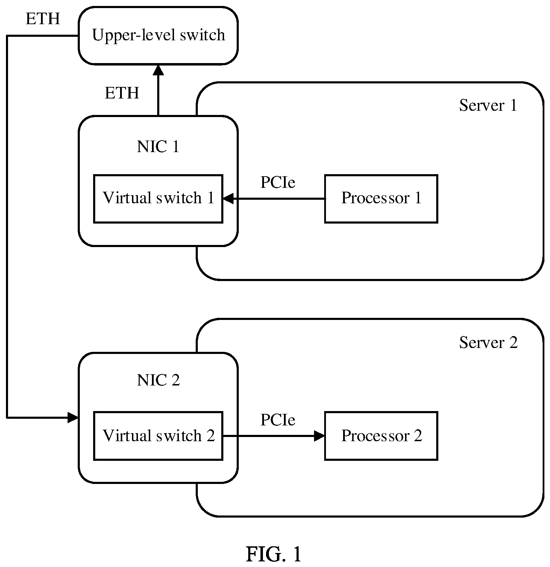

A packet is forwarded in a computer communication process. FIG. 1 shows a manner of forwarding a packet in a computer system in a related technology. The computer system includes a processor 1, a processor 2, a NIC 1, a NIC 2, a virtual switch 1 deployed in the NIC 1, a virtual switch 2 deployed in the NIC 2, and an upper-level switch. The processor 1 and the NIC 1 are located in a server 1, and the processor 2 and the NIC 2 are located in a server 2. The processor 1 is connected to the NIC 1, and the processor 2 is connected to the NIC 2 through a peripheral component interconnect express (peripheral component interconnect express, PCIe) bus separately. The NIC 1 is connected to the upper-level switch, and the NIC 2 is connected to the upper-level switch over an Ethernet (Ethernet, ETH) link separately. A packet forwarding process in which the processor 1 sends a packet and the processor 2 receives the packet is used as an example, that is, a cross-server packet forwarding process is used as an example. The packet forwarding process includes the following step 1 to step 7, and units of delays in these steps include a nanosecond (nanosecond, ns) and a microsecond (microsecond, µs).

Step 1: A delay is 75 ns. The processor 1 generates the packet.

Step 2: A delay is 500 ns. The processor 1 sends the packet to the NIC 1 through the PCIe bus.

Step 3: A delay is 10 µs. The virtual switch 1 in the NIC 1 performs address mapping on the packet, and sends the packet obtained through address mapping to the upper-level switch.

Step 4: A delay is 1 µs. The upper-level switch queries a routing table in the upper-level switch, and sends the packet to the NIC 2.

Step 5: A delay is 10 µs. The virtual switch 2 in the NIC 2 performs address mapping on the packet.

Step 6: A delay is 500 ns. The virtual switch 2 in the NIC 2 performs format conversion on the packet obtained through address mapping, to obtain data that meets a PCIe bus requirement, which is also referred to as PCIe configuration spatial data.

Step 7: A delay is 75 ns. The processor 2 obtains the PCIe configuration spatial data.

A sum of the delays in step 1 to step 7 is 22.15 µs, that is, a packet forwarding delay is 22.15 µs. The packet forwarding process in the related technology depends on the upper-level switch, a packet forwarding path includes the upper-level switch, the forwarding path is long, and a packet forwarding delay is high.

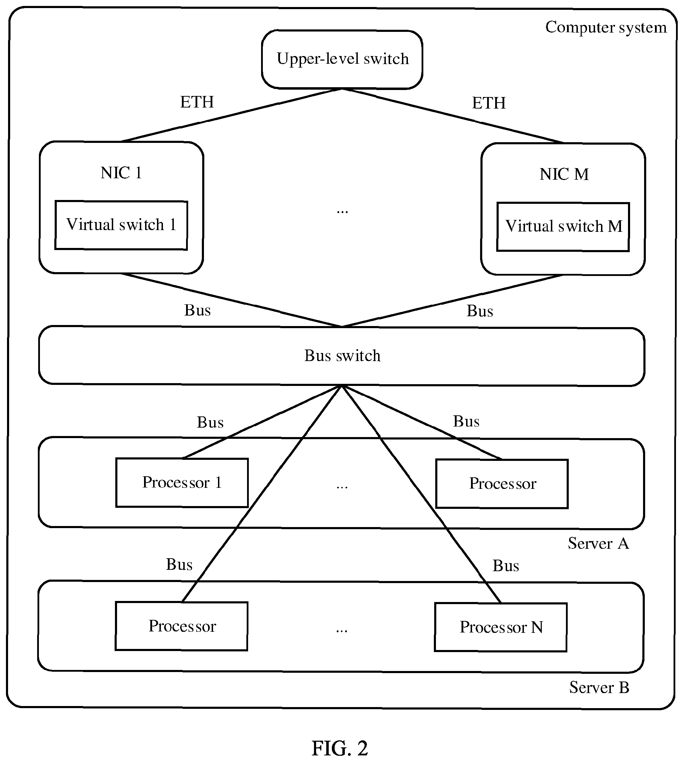

An embodiment of this application provides a computer system. As shown in FIG. 2, the computer system includes a bus switch, an upper-level switch, a plurality of processors, and a plurality of NICs. The plurality of processors are a processor 1 to a processor N shown in FIG. 2, where N is a positive integer greater than or equal to 2. The plurality of processors may be distributed in different communication devices. The communication devices include but are not limited to servers and the like. The plurality of NICs are a NIC 1 to a NIC M shown in FIG. 2, where M is a positive integer greater than or equal to 2.

The bus switch is connected to the plurality of processors through buses, the bus switch is further connected to the plurality of NICs through buses, and the plurality of NICs are further connected to the upper-level switch, for example, connected to the upper-level switch over Ethernet links. Therefore, a bus network is formed in the computer system, and the computer system is a bus network technology-based system. Compared with an Ethernet network shown in FIG. 1, the bus network has a lower delay and a larger bandwidth. Therefore, long-distance sharing of different components, especially long-distance sharing of different delay-sensitive components, can be implemented based on the bus network. This helps decouple different components, improves component utilization, and makes the computer system applicable to a plurality of scenarios such as a public cloud. Different components may include a memory (not shown in FIG. 2), a processor, a NIC, and the like. This is not limited in embodiments of this application.

For example, the foregoing bus includes but is not limited to a compute express link (compute express link, CXL) bus, an NVDIA link (NVDIA link, NVLink) bus, and the like. In comparison with a conventional PCIe bus, when communication is performed based on the CXL bus or the NVLink bus, an operating system of a processor does not need to be depended on, so that a communication process has higher efficiency. For example, the upper-level switch includes but is not limited to a top of rack (top of rack, TOR) switch, and the TOR switch is also referred to as an intra-rack switch.

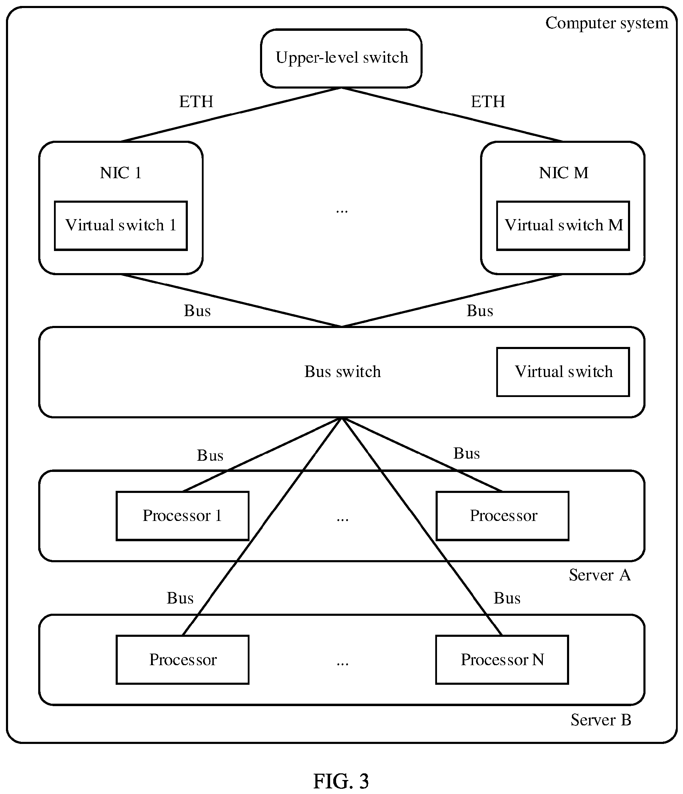

For example, as shown in FIG. 2, the computer system includes a virtual switch. In this embodiment of this application, the virtual switch may be deployed in the NIC, the bus switch, and the processor in a software form. In some implementations, a centralized deployment manner may be used, and the virtual switch may be deployed in the NIC, the bus switch, or the processor (FIG. 2 does not show a case in which the virtual switch is deployed in the bus switch or the processor). In some other implementations, a distributed deployment manner may be used, and the virtual switch may be deployed in two or three components: the NIC, the bus switch, and the processor. For example, refer to a case shown in FIG. 3. The virtual switch is deployed in the NIC and the bus switch. Other cases of the distributed deployment manner may be that the virtual switch is deployed in the NIC and the processor, which are not listed one by one herein.

For example, the virtual switch includes but is not limited to an open virtual switch (open virtual switch, OVS) and the like. This is not limited in embodiments of this application.

In addition, the bus switch shown in FIG. 2 is deployed in a centralized manner. In this embodiment of this application, the bus switch may alternatively be deployed in a distributed manner. For example, the bus switch includes a plurality of sub-switches, and each NIC may be connected to at least one of the plurality of sub-switches through a bus. The bus is described above, and details are not described herein again.

In an example embodiment, the computer system may access a communication network via the upper-level switch. For example, the communication network includes a spine (spine) layer network, the computer system serves as a leaf (leaf), and the upper-level switch in the computer system is connected to a communication device in the spine layer network to access the spine layer network. Certainly, the spine layer network is merely an example. The accessed communication network is not limited in embodiments of this application, and the communication network may be set based on an actual requirement.

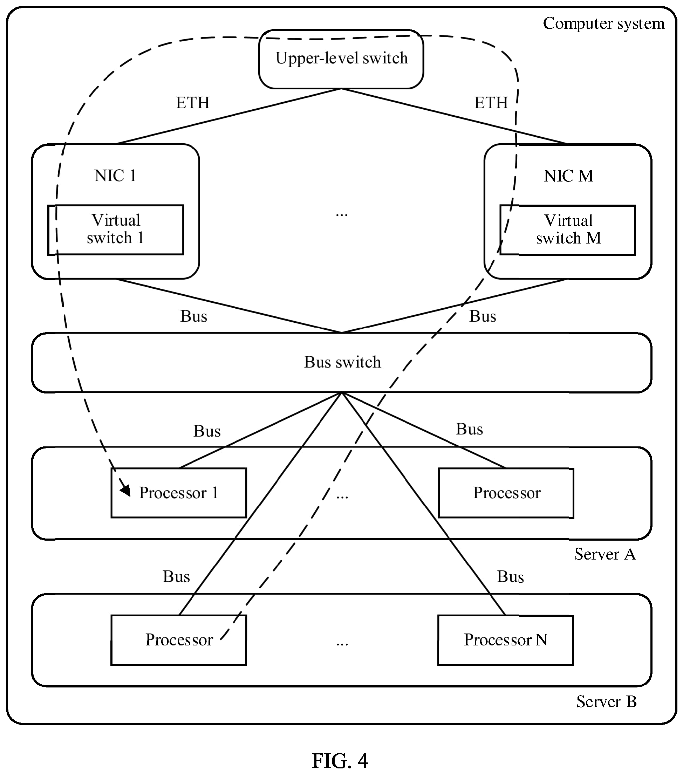

It should be understood that, if the related technology corresponding to FIG. 1 is applied to the computer system shown in FIG. 2, for a packet forwarding path, refer to FIG. 4. A packet forwarding process still depends on the upper-level switch, and consequently, the packet forwarding path is long and a packet forwarding delay is high.

Embodiments of this application provide a bus network technology-based packet forwarding method. The method may be applied to the computer system shown in FIG. 2. For ease of understanding, some example basic steps in the method are first described herein.

In the computer system, for the bus switch, each of the plurality of NICs, and each of the plurality of processors, a neighboring component in the computer system may be discovered by using a neighbor discovery protocol. For example, a neighboring component of the bus switch includes but is not limited to the plurality of processors and the plurality of NICs, a neighboring component of each NIC includes but is not limited to the bus switch and the upper-level switch, and a neighboring component of each processor includes but is not limited to the bus switch.

In all components included in the computer system, at least one component is used as a management component, the management component manages all components in the computer system, and a component other than the management component is a non-management component. For example, one of the plurality of processors may be used as the management component. This is not limited in embodiments of this application. The non-management component can be registered with the management component to facilitate management of the management component. For example, the non-management component may send registration information to the management component. The registration information includes but is not limited to attribute information of the non-management component, a neighboring component of the non-management component, and the like. This is not limited in embodiments of this application either.

The management component may use at least one NIC in the plurality of NICs as a communication interface, and the communication interface is connected to a remote device, to obtain a first correspondence between the plurality of processors and the plurality of NICs from the remote device. One NIC may correspond to one or more processors. For example, the remote device may be a device on a cloud scheduling platform, and the first correspondence between the plurality of processors and the plurality of NICs may be set by a user based on an actual requirement. This is not limited herein.

After obtaining the first correspondence between the plurality of processors and the plurality of NICs through the communication interface, the management component may determine a corresponding processor and a corresponding NIC based on the first correspondence. The bus switch provides a processor side port and a NIC side port. One processor uses at least one processor side port, and different processors use different processor side ports. One NIC uses at least one NIC port, and different NICs use different NIC ports. For the corresponding processor and the corresponding NIC, the management component may establish, in the bus switch, a second correspondence between a processor side port used by the processor and a NIC port used by the NIC, and the bus switch implements packet forwarding between the corresponding processor and the corresponding NIC based on the second correspondence.

For example, a processor 1 uses a port 1 (a processor side port), a processor 2 uses a port 2 (a processor side port), a NIC A uses a port 3 and a port 4 (NIC side ports), and the NIC A corresponds to the processor 1 and the processor 2. The second correspondence established by the management component in the bus switch may include a correspondence 1 between the port 1 and the port 3, and a correspondence 2 between the port 2 and the port 4. Therefore, after receiving, from the port 1, a packet generated and sent by the processor 1, the bus switch may query the second correspondence based on the port 1, and hit the correspondence 1 in the second correspondence, to determine, based on the correspondence 1, that the port 1 corresponds to the port 3. Therefore, the packet is forwarded through the port 3, and the NIC A receives the packet through the port 3, so that packet forwarding is implemented between the corresponding processor 1 and the corresponding NIC A.

The management component may further establish a first routing table (which is also referred to as a flow table). The first routing table includes an IP address of each NIC in the computer system, and an IP address of the NIC may be a physical (underlay) IP address. For example, when the computer system includes 16 NICs, the first routing table includes 16 IP addresses, and the 16 NICs are in one-to-one correspondence with the 16 IP addresses. The first routing table is used to determine whether a packet is a packet in the computer system. For example, the first routing table is used by a component (the bus switch, the NIC, or the processor) in the computer system, or the first routing table is used by a virtual switch deployed in these components. In the following method embodiment, a function of the first routing table is described in detail. Details are not described herein.

The management component may synchronize the first routing table to the component. For example, the management component may synchronize one first routing table to each NIC. In addition, the management component may further establish a second routing table in the NIC, where the second routing table is used by the NIC to forward a packet to the upper-level switch. In the following method embodiment, a process in which the NIC uses the second routing table is described. Details are not described herein.

The following describes the bus network technology-based packet forwarding method provided in embodiments of this application.

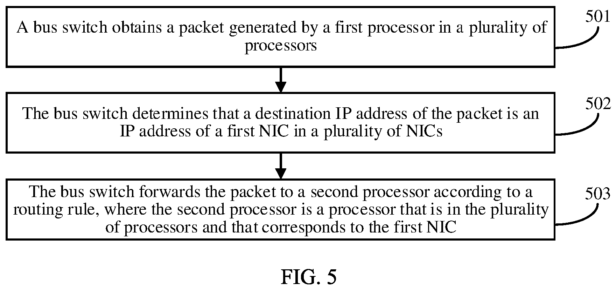

In an example embodiment, the bus network technology-based packet forwarding method provided in embodiments of this application may be applied to the bus switch in the computer system shown in FIG. 2. As shown in FIG. 5, the method includes the following step 501 to step 503.

Step 501: A bus switch obtains a packet generated by a first processor in a plurality of processors.

The first processor is any processor in the plurality of processors. The first processor may generate the packet, where a packet header of the packet includes a source IP address, a destination IP address, a source port, and a destination port. For example, the destination IP address of the packet is a virtual (overlay) destination IP address. In addition to the packet header, the packet further includes a payload part. The payload part is also referred to as bus data. The payload part may include a bus address, or may not include a bus address. The destination IP address is an address that can be applied to a network domain, where the network domain includes a NIC, an upper-level switch, and another device outside a computer system. The bus address is an address that can be applied to a bus domain, where the bus domain includes the bus switch and the processor.

After generating the packet, the first processor sends the packet to the bus switch, and the bus switch receives the packet, to obtain the packet generated by the first processor.

Step 502: The bus switch determines that the destination IP address of the packet is an IP address of a first NIC in a plurality of NICs.

It can be learned from the descriptions of step 501 that the packet header of the packet includes the destination IP address, and the bus switch parses the packet to obtain the destination IP address of the packet. For example, the bus switch parses the packet header of the packet, and does not parse the payload part, to obtain the destination IP address of the packet. A parsing manner herein is merely an example, and is not intended to limit this embodiment of this application.

After obtaining the destination IP address of the packet, the bus switch determines whether the destination IP address of the packet is the IP address of the first NIC in the plurality of NICs, where the first NIC is any NIC in the plurality of NICs. If the destination IP address of the packet is the IP address of the first NIC, it indicates that the packet is a packet in the computer system, and a processor configured to receive the packet is a second processor corresponding to the first NIC. In other words, the packet does not need to be forwarded outside the computer system, and forwarding of the packet can be completed in the computer system. Alternatively, if the destination IP address of the packet is not the IP address of the first NIC, it indicates that the packet is not a packet in the computer system, and a processor configured to receive the packet is not a processor corresponding to any NIC in the plurality of NICs, but a processor corresponding to another NIC outside the computer system. In other words, the packet needs to be forwarded outside the computer system, and forwarding of the packet cannot be completed in the computer system.

For example, the bus switch queries the first routing table described above based on the destination IP address of the packet. Because the first routing table includes an IP address of each NIC in the computer system, when the destination IP address of the packet hits an IP address of a NIC included in the first routing table, it indicates that the packet is a packet in the computer system, and the hit IP address of the NIC is the IP address of the first NIC; or when the destination IP address of the packet does not hit an IP address of any NIC included in the first routing table, it indicates that the packet is not a packet in the computer system.

In an example embodiment, the IP address of each NIC included in the first routing table is a physical IP address. Therefore, the IP address of the first NIC is also a physical IP address. For example, determining that the destination internet protocol IP address of the packet is the IP address of the first NIC in the plurality of NICs includes: if the destination IP address of the packet is the virtual destination IP address, converting the virtual destination IP address of the packet into a physical destination IP address of the packet; and determining that the physical destination IP address of the packet is the physical IP address of the first NIC in the plurality of NICs.

Because the destination IP address of the packet is the virtual destination IP address, and the IP address of each NIC included in the first routing table is the physical IP address, the virtual destination IP address of the packet cannot be directly matched with the physical IP address of each NIC included in the first routing table. Instead, the virtual destination IP address of the packet needs to be first converted into the physical destination IP address of the packet, and then the physical destination IP address of the packet is matched with the physical IP address of each NIC included in the first routing table. If the physical destination IP address of the packet is the physical IP address of the first NIC, it indicates that the packet is a packet in the computer system. If the physical destination IP address of the packet is not a physical IP address of any NIC in the plurality of NICs, it indicates that the packet is a packet outside the computer system.

For a case in which the packet is a packet in the computer system, the bus switch controls the bus switch to forward the packet to the second processor according to a routing rule. This forwarding manner does not depend on the upper-level switch. For example, a packet forwarding path does not include the upper-level switch that is in the computer system and that is connected to the plurality of NICs. In other words, components included in the packet forwarding path are all or a part of components other than the upper-level switch in the computer system. Therefore, a packet forwarding path can be shortened, and a packet forwarding delay can be reduced.

In an example embodiment, the bus switch includes a virtual switch. Because the virtual switch is deployed in the bus switch, after the bus switch receives the packet, the virtual switch may obtain the packet. Correspondingly, that the bus switch determines that the destination IP address of the packet is the IP address of the first NIC in the plurality of NICs includes: determining, via the virtual switch, that the destination IP address of the packet is the IP address of the first NIC in the plurality of NICs. For example, when the IP address of the first NIC is the physical IP address, if the destination IP address of the packet is the virtual destination IP address, the virtual switch may first convert the virtual destination IP address of the packet into the physical destination IP address of the packet, and then determine that the physical destination IP address of the packet is the physical IP address of the first NIC in the plurality of NICs.

Step 503: The bus switch forwards the packet to the second processor according to the routing rule, where the second processor is a processor that is in the plurality of processors and that corresponds to the first NIC.

The routing rule may be preconfigured, or may be established in real time. For example, the bus switch establishes the routing rule, or the bus switch establishes the routing rule via the virtual switch.

In this embodiment of this application, the established routing rule may be the following routing rule 1 or routing rule 2.

The routing rule 1: The routing rule includes a correspondence between the destination IP address of the packet and the second processor. The routing rule is used by the bus switch to directly forward the packet to the second processor based on the correspondence. That the bus switch forwards the packet to the second processor according to the routing rule includes: The bus switch forwards the packet to the second processor based on the correspondence included in the routing rule.

The bus switch parses the packet to obtain the destination IP address of the packet, and directly forwards the packet to the second processor based on the destination IP address of the packet obtained through parsing and the correspondence included in the routing rule 1. Because the routing rule 1 exists in the bus switch, the bus switch queries, based on the destination IP address of the packet, the correspondence included in the routing rule 1, to obtain the second processor corresponding to the destination IP address of the packet; and therefore may directly forward the packet to the second processor. For example, the bus switch may parse the packet to obtain the payload part, and forward the payload part to the second processor, to implement a forwarding process of forwarding.

When the routing rule 1 is used, the packet forwarding path includes the first processor, the bus switch, and the second processor. The forwarding path does not include the upper-level switch and includes no NIC. Therefore, not only bandwidth occupation on an upper-level switch side of the NIC can be reduced, but also bandwidth occupation on a bus switch side of the NIC can be reduced, and the packet forwarding delay can be reduced. For example, if a proportion of packet traffic in total traffic is greater than 30%, bandwidth occupation on an upper-level switch side of the first NIC and a second NIC is reduced by more than 30%, bandwidth occupation on a bus switch side of the first NIC and the second NIC is also reduced by more than 30%, and the packet forwarding delay is reduced by more than 95%.

However, the forwarding path is still a slow forwarding path, because the bus switch or the virtual switch deployed in the bus switch needs to establish the routing rule, and specific time needs to be consumed to establish the routing rule. Certainly, the routing rule does not need to be repeatedly established. Therefore, after the routing rule is established, if the bus switch receives again the packet sent by the first processor, the bus switch may directly parse the packet to obtain the destination IP address of the packet, and directly forward the packet to the second processor based on the destination IP address of the packet obtained through parsing and the correspondence included in the routing rule. In this case, although the packet forwarding path still includes the first processor, the bus switch, and the second processor, the forwarding path is a fast forwarding path.

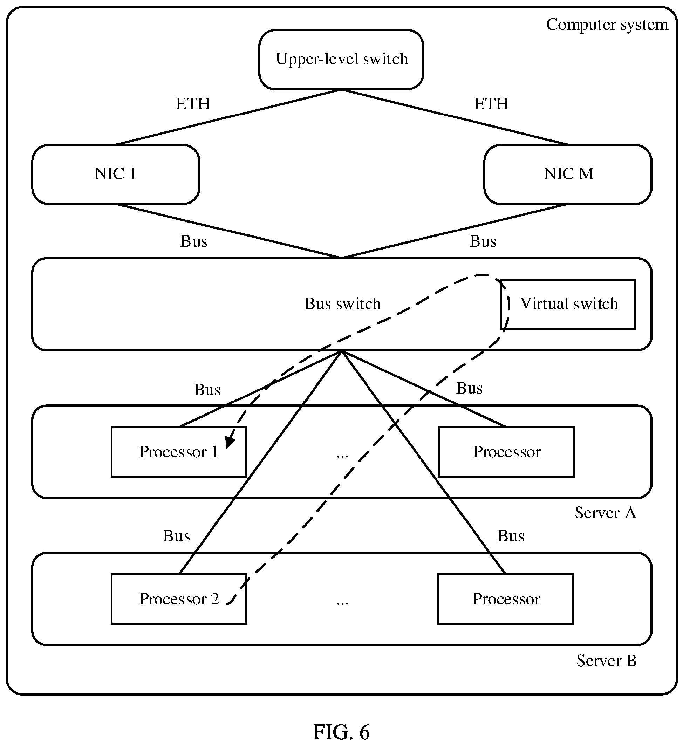

As shown in FIG. 6, the first processor is a processor 2, and the second processor is a processor 1 (for example, a CPU 1). When the routing rule 1 is used, the slow forwarding path and the fast forwarding path of the packet sequentially include the processor 2, a bus switch, and the processor 1.

The slow forwarding path of the packet when the routing rule 1 is used is used as an example, a packet forwarding process may include the following step 601 to step 605, and the packet forwarding delay is only about 1050 ns.

Step 601: A delay is about 75 ns. The processor 2 generates a packet, where a destination IP address of the packet is an overlay destination IP address.

Step 602: A delay is about 100 ns. The processor 2 sends the packet to the bus switch.

Step 603: A delay is about 500 ns. A virtual switch in the bus switch converts the overlay destination IP address of the packet into an underlay destination IP address.

Step 604: A delay is about 300 ns. The virtual switch queries the first routing table based on the underlay destination IP address, where the underlay destination IP address hits an underlay IP address of a NIC 1 in the first routing table. In addition, the virtual switch establishes a routing rule (including a correspondence between the overlay destination IP address and the CPU 1) in the bus switch. The bus switch parses the packet to obtain a payload part, and forwards the payload part to the CPU 1 according to the routing rule.

Step 605: A delay is about 75 ns. The CPU 1 obtains the payload part and the packet forwarding process is completed.

The fast forwarding path of the packet when the routing rule 1 is used is used as an example, and a packet forwarding process may include the following step 606 to step 609.

Step 606: A delay is about 75 ns. The processor 2 generates a packet, where a destination IP address of the packet is an overlay destination IP address.

Step 607: A delay is about 100 ns. The processor 2 sends the packet to the bus switch.

Step 608: A delay is about 100 ns. The bus switch parses the packet to obtain a payload part, and forwards the payload part to the CPU 1 according to the established routing rule.

Step 609: A delay is about 75 ns. The CPU 1 obtains the payload part and the packet forwarding process is completed.

The routing rule 2: The routing rule includes a correspondence between the destination IP address of the packet and the first NIC. The routing rule is used by the bus switch to forward the packet to the first NIC based on the correspondence, to forward the packet to the second processor via the first NIC. That the bus switch forwards the packet to the second processor according to the routing rule includes: The bus switch forwards the packet to the first NIC based on the correspondence included in the routing rule 2, to forward the packet to the second processor via the first NIC.

The bus switch parses the packet to obtain the destination IP address of the packet, and forwards the packet to the first NIC based on the destination IP address of the packet obtained through parsing and the correspondence included in the routing rule 2, to forward the packet to the second processor via the first NIC. Because the routing rule 2 exists in the bus switch, the bus switch queries, based on the destination IP address of the packet, the correspondence included in the routing rule 2, to obtain the first NIC corresponding to the destination IP address of the packet; and then forwards the packet to the first NIC. Then, the first NIC parses the packet to obtain the destination IP address of the packet. Because the destination IP address of the packet is the IP address of the first NIC, the first NIC continues processing the packet.

In some implementations, if the payload part of the packet does not include the bus address, and the destination IP address of the packet is the virtual destination IP address, the first NIC determines the physical destination IP address based on the virtual destination IP address, encapsulates the determined physical destination IP address into an outer layer of the packet to obtain an updated packet, and sends the updated packet to the bus switch. The bus switch performs query based on the physical destination IP address in the updated packet to obtain the second processor corresponding to the physical destination IP address and obtain, through parsing, a payload part in the updated packet, and sends the payload part to the second processor.

In some other implementations, if the payload part of the packet does not include the bus address, and the destination IP address of the packet is the physical destination IP address, the first NIC sends the packet to the bus switch. The bus switch performs query based on the physical destination IP address in the packet to obtain the second processor corresponding to the physical destination IP address, and sends the payload part of the packet to the second processor.

In some still other implementations, if the payload part of the packet includes the bus address, the first NIC may obtain, through parsing, the payload part including the bus address, and send the payload part including the bus address to the bus switch. The bus switch performs query based on the bus address to obtain the second processor corresponding to the bus address, and sends the payload part to the second processor.

In some yet other implementations, if the payload part of the packet includes the bus address, the first NIC sends the packet to the bus switch. The bus switch obtains, through parsing, the payload part including the bus address, performs query based on the bus address to obtain the second processor corresponding to the bus address, and sends the payload part to the second processor.

The packet forwarding process is completed by using the foregoing processes.

When the routing rule 2 is used, both the slow forwarding path and the fast forwarding path of the packet include the first processor, the bus switch, the first NIC, the bus switch, and the second processor. Compared with the slow forwarding path, the fast forwarding path does not require repeated establishment of the routing rule, so that the packet forwarding delay can be reduced.

The foregoing describes a case in which the packet is a packet in the computer system. The following briefly describes a case in which the packet is a packet outside the computer system. For example, the method further includes: The bus switch determines (for example, determines via the virtual switch) that the destination IP address of the packet is an IP address other than an IP address of any NIC in the plurality of NICs (which indicates that the packet is a packet outside the computer system), and forwards the packet to the upper-level switch that is in the computer system and that is connected to the plurality of NICs. After determining that the packet is a packet outside the computer system, the bus switch may send the packet to the second NIC, so that the second NIC queries the second routing table described above, to forward the packet to the upper-level switch; and the upper-level switch forwards the packet to the destination IP address of the packet.

In conclusion, in this embodiment of this application, after the bus switch obtains the packet generated by the first processor, if the destination IP address of the packet is the IP address of the first NIC, it is considered that the packet is a packet in the computer system. Therefore, the packet is forwarded to the second processor according to the routing rule without depending on a component like the upper-level switch. Therefore, the packet forwarding path is short, and the forwarding delay is low.

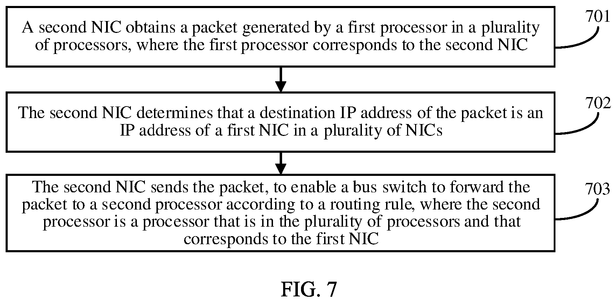

In an example embodiment, the bus network technology-based packet forwarding method provided in embodiments of this application may be applied to the second NIC in the computer system shown in FIG. 2. As shown in FIG. 7, the method includes the following step 701 to step 703.

Step 701: A second NIC obtains a packet generated by a first processor in a plurality of processors, where the first processor corresponds to the second NIC.

For the packet generated by the first processor, refer to the descriptions of step 501. After generating the packet, the first processor sends the packet to a bus switch, and the bus switch receives the packet through a processor side port used by the first processor. The bus switch queries, based on the processor side port used by the first processor, the second correspondence described above, to obtain a NIC side port corresponding to the processor side port, where the NIC side port is used by the second NIC corresponding to the first processor. Therefore, the bus switch sends the packet through the NIC side port corresponding to the processor side port, and the second NIC that uses the NIC side port may receive the packet, so that the second NIC obtains the packet generated by the first processor.

Step 702: The second NIC determines that a destination IP address of the packet is an IP address of a first NIC in a plurality of NICs.

The second NIC parses the packet to obtain the destination IP address of the packet. For example, after parsing the entire packet (including a packet header and a payload part), the second NIC obtains the destination IP address of the packet.

For example, the destination IP address of the packet is a virtual destination IP address. In an example embodiment, the IP address of the first NIC is a physical IP address. Determining that the destination internet protocol IP address of the packet is the IP address of the first NIC in the plurality of NICs includes: if the destination IP address of the packet is the virtual destination IP address, converting the virtual destination IP address of the packet into a physical destination IP address of the packet; and determining that the physical destination IP address of the packet is the physical IP address of the first NIC in the plurality of NICs. For a manner in which the second NIC determines that the destination IP address of the packet is the IP address of the first NIC in the plurality of NICs, refer to the determining process of the bus switch in step 502. Details are not described herein again.

In an example embodiment, the second NIC includes a virtual switch. That the second NIC determines that the destination internet protocol IP address of the packet is the IP address of the first NIC in the plurality of NICs includes: The second NIC determines, via the virtual switch, that the destination IP address of the packet is the IP address of the first NIC in the plurality of NICs. For example, when the IP address of the first NIC is the physical IP address, if the destination IP address of the packet is the virtual destination IP address, the virtual switch may first convert the virtual destination IP address of the packet into the physical destination IP address of the packet, and then determine that the physical destination IP address of the packet is the physical IP address of the first NIC in the plurality of NICs.

Step 703: The second NIC sends the packet, to enable the bus switch to forward the packet to a second processor according to a routing rule, where the second processor is a processor that is in the plurality of processors and that corresponds to the first NIC.

For the routing rule, refer to the descriptions of step 503. Details are not described herein again. After determining that the destination IP address of the packet is the IP address of the first NIC, the second NIC returns the packet to the bus switch, to enable the bus switch to forward the packet to the second processor according to the routing rule. For a process in which the bus switch sends the packet to the second processor according to a routing rule 1 or a routing rule 2, refer to the descriptions of step 503. Details are not described herein again.

When the routing rule 1 is used, a packet forwarding path includes the first processor, the bus switch, the second NIC, the bus switch, and the second processor. The forwarding path does not include an upper-level switch, so that bandwidth occupation on an upper-level switch side of the NIC can be reduced, and a packet forwarding delay can be reduced. For example, if a proportion of packet traffic in total traffic is greater than 30%, bandwidth occupation on an upper-level switch side of the first NIC and the second NIC is reduced by more than 30%, and the packet forwarding delay is reduced by more than 90%.

However, the forwarding path is still a slow forwarding path, because a routing rule needs to be established, and specific time needs to be consumed to establish the routing rule. Certainly, the routing rule does not need to be repeatedly established. Therefore, after the routing rule is established, if the bus switch receives again the packet sent by the first processor, the bus switch may directly parse the packet to obtain the destination IP address of the packet, and directly forward the packet to the second processor based on the destination IP address of the packet obtained through parsing and a correspondence included in the routing rule 1. In this case, the packet forwarding path includes the first processor, the bus switch, and the second processor, and interaction between the bus switch and the second NIC is not included, so that the forwarding path is a fast forwarding path.

When the routing rule 2 is used, the packet forwarding path includes the first processor, the bus switch, the second NIC, the bus switch, the first NIC, the bus switch, and the second processor. The forwarding path does not include the upper-level switch, so that bandwidth occupation on an upper-level switch side (or an Ethernet side) of the NIC can be reduced, and a packet forwarding delay can be reduced. For example, if a proportion of packet traffic in total traffic is greater than 30%, bandwidth occupation on an upper-level switch side of the first NIC and the second NIC is reduced by more than 30%, and the packet forwarding delay is reduced by more than 90%.

However, the forwarding path is still a slow forwarding path, because the bus switch needs to send the packet to the second NIC, the bus switch or the virtual switch deployed in the second NIC needs to establish the routing rule, and the virtual switch deployed in the second NIC further needs to return the packet to the bus switch, and control the bus switch to forward the packet to the second processor according to the established routing rule. Certainly, the routing rule does not need to be repeatedly established. Therefore, after the routing rule is established, if the bus switch receives again the packet sent by the first processor, the bus switch does not need to send the packet to the second NIC, but may directly parse the packet to obtain the destination IP address of the packet, and forward the packet to the first NIC based on the destination IP address of the packet obtained through parsing and a correspondence included in the routing rule, to forward the packet to the second processor via the first NIC. In this case, the packet forwarding path includes the first processor, the bus switch, the first NIC, the bus switch, and the second processor, and interaction between the bus switch and the second NIC is not included, so that the forwarding path is a fast forwarding path.

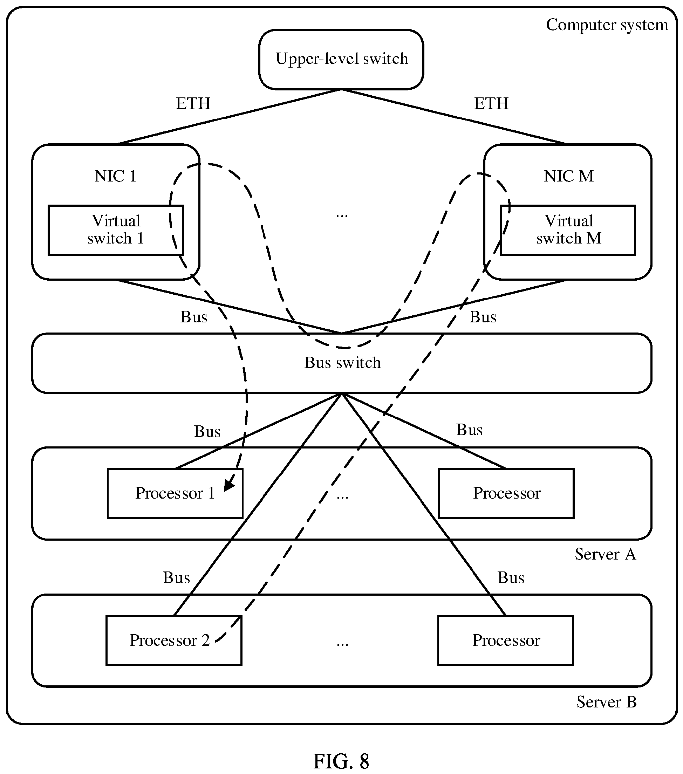

As shown in FIG. 8, the first processor is a processor 2, the second NIC is a NIC M, the second processor is a processor 1 (for example, a CPU 1), and the first NIC is a NIC 1. When the routing rule 2 is used, the slow forwarding path of the packet sequentially includes the processor 2, a bus switch, the NIC M, the bus switch, the NIC 1, the bus switch, and the processor 1. The fast forwarding path of the packet sequentially includes the processor 2, the bus switch, the NIC 1, the bus switch, and the processor 1.

The slow forwarding path of the packet when the routing rule 2 is used is used as an example, a packet forwarding process may include the following step 801 to step 807, and the packet forwarding delay is only about 2.65 µs.

Step 801: A delay is about 75 ns. The processor 2 generates a packet, where a destination IP address of the packet is an overlay destination IP address.

Step 802: A delay is about 100 ns. The processor 2 sends the packet to the NIC M via the bus switch.

Step 803: A delay is about 1000 ns. A virtual switch M in the NIC M converts the overlay destination IP address of the packet into an underlay destination IP address.

Step 804: A delay is about 300 ns. The virtual switch M queries a first routing table based on the underlay destination IP address, where the underlay destination IP address hits an underlay IP address of the NIC 1 in the first routing table. The virtual switch M returns the packet to the bus switch, and establishes a routing rule (including a correspondence between the overlay destination IP address and the NIC 1) in the bus switch. The bus switch forwards the packet to the NIC 1 according to the routing rule.

Step 805: A delay is about 1000 ns. A virtual switch 1 in the NIC 1 converts the overlay destination IP address of the packet into the underlay destination IP address, which is the same as the underlay IP address of the NIC 1. Then, the virtual switch 1 in the NIC 1 converts the overlay destination IP address of the packet into the underlay destination IP address; encapsulates the underlay destination IP address into an outer layer of the packet, to obtain an updated packet; and sends the updated packet to the bus switch.

Step 806: A delay is about 100 ns. The bus switch parses the updated packet to obtain a payload part, obtains the CPU 1 through query based on the underlay destination IP address in the updated packet, and sends the payload part to the CPU 1, for example, sends the payload part to configuration space of the CPU 1.

Step 807: A delay is about 75 ns. The CPU 1 obtains the payload part and the packet forwarding process is completed.

The fast forwarding path of the packet when the routing rule 2 is used is used as an example, and a packet forwarding process may include the following step 808 to step 812.

Step 808: A delay is about 75 ns. The processor 2 generates a packet, where a destination IP address of the packet is an overlay destination IP address.

Step 809: A delay is about 100 ns. The processor 2 sends the packet to the bus switch, and the bus switch forwards the packet to the NIC 1 according to the established routing rule.

Step 810: A delay is about 1000 ns. A virtual switch 1 in the NIC 1 converts the overlay destination IP address of the packet into the underlay destination IP address, which is the same as the underlay IP address of the NIC 1. Then, the virtual switch 1 in the NIC 1 converts the overlay destination IP address of the packet into the underlay destination IP address; encapsulates the underlay destination IP address into an outer layer of the packet, to obtain an updated packet; and sends the updated packet to the bus switch.

Step 811: A delay is about 100 ns. The bus switch parses the updated packet to obtain a payload part, obtains the CPU 1 through query based on the underlay destination IP address in the updated packet, and sends the payload part to the CPU 1, for example, sends the payload part to configuration space of the CPU 1.

Step 812: A delay is about 75 ns. The CPU 1 obtains the payload part and the packet forwarding process is completed.

The foregoing describes a case in which the packet is a packet in the computer system. The following briefly describes a case in which the packet is a packet outside the computer system. For example, the method further includes: The second NIC determines (for example, determines via the virtual switch) that the destination IP address of the packet is an IP address other than an IP address of any NIC in the plurality of NICs (which indicates that the packet is a packet outside the computer system), and forwards the packet to the upper-level switch that is in the computer system and that is connected to the plurality of NICs. After determining that the packet is a packet outside the computer system, the second NIC queries the second routing table described above, to forward the packet to the upper-level switch, and the upper-level switch forwards the packet to the destination IP address of the packet.

In conclusion, in this embodiment of this application, after the second NIC obtains the packet generated by the first processor, if the destination IP address of the packet is the IP address of the first NIC, it is considered that the packet is a packet in the computer system. Therefore, the packet is returned to the bus switch, to enable the bus switch to forward the packet to the second processor according to the routing rule without depending on a component like the upper-level switch. Therefore, the packet forwarding path is short, and the forwarding delay is low.

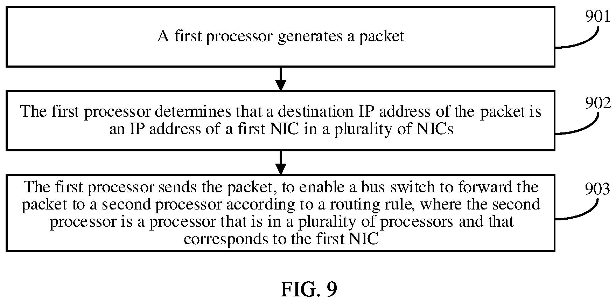

In an example embodiment, the bus network technology-based packet forwarding method provided in embodiments of this application may be applied to the first processor in the computer system shown in FIG. 2. As shown in FIG. 9, the method includes the following step 901 to step 903.

Step 901: A first processor generates a packet.

For the packet generated by the first processor, refer to the descriptions of step 503. Details are not described herein again.

Step 902: The first processor determines that a destination IP address of the packet is an IP address of a first NIC in a plurality of NICs.

The first processor parses the packet to obtain the destination IP address of the packet. For example, the first processor parses a packet header of the packet, and does not parse a payload part, to obtain the destination IP address of the packet.

For example, the destination IP address of the packet is a virtual destination IP address. In an example embodiment, the IP address of the first NIC is a physical IP address. That the first processor determines that the destination IP address of the packet is the IP address of the first NIC in the plurality of NICs includes: If the destination IP address of the packet is the virtual destination IP address, the first processor converts the virtual destination IP address of the packet into a physical destination IP address of the packet; and determines that the physical destination IP address of the packet is the physical IP address of the first NIC in the plurality of NICs. For a manner in which the first processor determines that the destination IP address of the packet is the IP address of the first NIC in the plurality of NICs, refer to the determining process of the bus switch in step 502. Details are not described herein again.

For example, the first processor includes a virtual switch. That the first processor determines that the destination internet protocol IP address of the packet is the IP address of the first NIC in the plurality of NICs includes: The first processor determines, via the virtual switch, that the destination IP address of the packet is the IP address of the first NIC in the plurality of NICs. For example, when the IP address of the first NIC is the physical IP address, if the destination IP address of the packet is the virtual destination IP address, the virtual switch may first convert the virtual destination IP address of the packet into the physical destination IP address of the packet, and then determine that the physical destination IP address of the packet is the physical IP address of the first NIC in the plurality of NICs.

Step 903: The first processor sends the packet, to enable the bus switch to forward the packet to a second processor according to a routing rule, where the second processor is a processor that is in a plurality of processors and that corresponds to the first NIC.

For the routing rule, refer to the descriptions of step 503. Details are not described herein again. After determining that the destination IP address of the packet is the IP address of the first NIC, the first processor sends the packet to the bus switch, to enable the bus switch to forward the packet to the second processor according to the routing rule. For a process in which the bus switch sends the packet to the second processor according to a routing rule 1 or a routing rule 2, refer to the descriptions of step 503. Details are not described herein again.

When the routing rule 1 is used, the packet forwarding path includes the first processor, the bus switch, and the second processor. For reduction of a bandwidth on an upper-level switch side of the NIC, a bandwidth on a bus switch side of the NIC, and a forwarding delay of the forwarding path, refer to the descriptions of the foregoing implementation 2. Details are not described herein again.

However, the forwarding path is still a slow forwarding path, because the bus switch or the virtual switch deployed in the first processor needs to establish the routing rule, and specific time needs to be consumed to establish the routing rule. Certainly, the routing rule does not need to be repeatedly established. Therefore, after the routing rule is established, if the first processor generates a packet again, the routing rule does not need to be established again. The bus switch may directly parse the packet to obtain the destination IP address of the packet, and directly forward the packet to the second processor based on the destination IP address of the packet obtained through parsing and a correspondence included in the routing rule. In this case, although the packet forwarding path still includes the first processor, the bus switch, and the second processor, the forwarding path is a fast forwarding path.

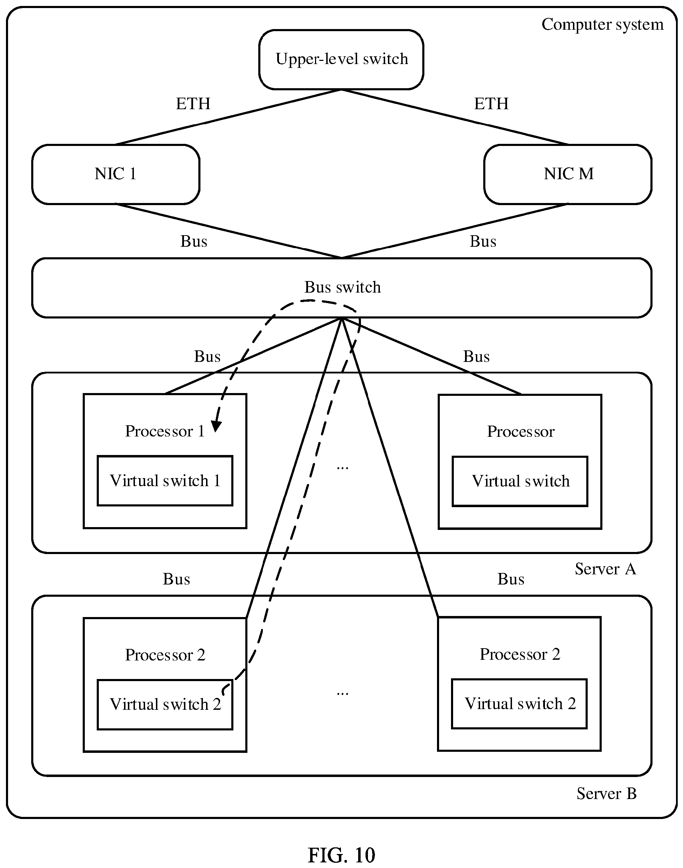

As shown in FIG. 10, the first processor is a processor 2, and the second processor is a processor 1 (for example, a CPU 1). When the routing rule 1 is used, the slow forwarding path and the fast forwarding path of the packet sequentially include the processor 2, a bus switch, and the processor 1.

The slow forwarding path of the packet when the routing rule 1 is used is used as an example, a packet forwarding process may include the following step 1001 to step 1006, and the packet forwarding delay is only about 1050 ns.

Step 1001: A delay is about 75 ns. The processor 2 generates a packet, where a destination IP address of the packet is an overlay destination IP address.

Step 1002: A delay is about 500 ns. A virtual switch 2 in the processor 2 converts the overlay destination IP address of the packet into an underlay destination IP address.

Step 1003: A delay is about 200 ns. The virtual switch 2 queries a first routing table based on the underlay destination IP address, where the underlay destination IP address hits an underlay IP address of a NIC 1 in the first routing table. Therefore, the virtual switch 2 establishes a routing rule (including a correspondence between the overlay destination IP address and the CPU 1) in the bus switch.

Step 1004: A delay is 100 ns. The processor 2 sends the packet to the bus switch.

Step 1005: A delay is about 100 ns. The bus switch parses the packet to obtain a payload part, and forwards the payload part to the CPU 1 according to the routing rule.

Step 1006: A delay is about 75 ns. The CPU 1 obtains bus data and the packet forwarding process is completed.

The fast forwarding path of the packet when the routing rule 1 is used is used as an example, and a packet forwarding process may include the following step 1007 to step 1010.

Step 1007: A delay is about 75 ns. The processor 2 generates a packet, where a destination IP address of the packet is an overlay destination IP address.

Step 1008: A delay is about 100 ns. The processor 2 sends the packet to the bus switch.

Step 1009: A delay is about 100 ns. The bus switch parses the packet to obtain a payload part, and forwards the payload part to the CPU 1 according to the established routing rule.

Step 1010: A delay is about 75 ns. The CPU 1 obtains the payload part and the packet forwarding process is completed.

When the routing rule 2 is used, both the slow forwarding path and the fast forwarding path of the packet include the first processor, the bus switch, the first NIC, the bus switch, and the second processor. Compared with the slow forwarding path, the fast forwarding path does not require repeated establishment of the routing rule, so that the packet forwarding delay can be reduced. Details are not described herein.

The foregoing describes a case in which the packet is a packet in the computer system. The following briefly describes a case in which the packet is a packet outside the computer system. For example, the method further includes: The first processor determines that the destination IP address of the packet is not an IP address of any NIC in the plurality of NICs (which indicates that the packet is a packet outside the computer system), and forwards the packet to the upper-level switch that is in the computer system and that is connected to the plurality of NICs. After determining that the packet is a packet outside the computer system, the first processor sends the packet to the bus switch, and the bus switch sends the packet to a second NIC, so that the second NIC queries the second routing table described above, to forward the packet to the upper-level switch; and the upper-level switch forwards the packet to the destination IP address of the packet.

In conclusion, in this embodiment of this application, after the first processor generates the packet, if the destination IP address of the packet is the IP address of the first NIC, it is considered that the packet is a packet in the computer system. Therefore, the packet is sent to the bus switch, to enable the bus switch to forward the packet according to the routing rule without depending on a component like the upper-level switch. Therefore, the packet forwarding path is short, and the forwarding delay is low.

In an example embodiment, the foregoing uses an example in which the virtual switch is deployed in a centralized manner in the bus switch, the second NIC, or the first processor for description. It can be learned from the descriptions corresponding to FIG. 3 that, the virtual switch may alternatively be deployed in a distributed manner. In this case, the virtual switch may be tiered, an upper-level virtual switch establishes a plurality of routing rules, and a lower-level virtual switch establishes a part of the plurality of routing rules, to avoid impact of excessive routing rules on packet forwarding efficiency. If the packet that needs to be forwarded does not hit the part of routing rules, for example, a corresponding processor or NIC cannot be found based on a destination IP address of the packet that needs to be forwarded, the lower-level virtual switch obtains one or more other routing rules other than the part of the plurality of routing rules from the upper-level virtual switch, so that the packet that needs to be forwarded can hit the one or more other obtained routing rules, to implement packet forwarding.

For example, the virtual switch is deployed in the bus switch and the second NIC, the lower-level virtual switch is deployed in the bus switch, and the upper-level virtual switch is deployed in the second NIC. If the bus switch receives the packet, and the packet cannot hit the part of routing rules deployed by the lower-level virtual switch in the bus switch, the lower-level virtual switch may obtain one or more other routing rules from the upper-level virtual switch, to help the bus switch forward the packet.

In an example embodiment, an embodiment of this application provides a bus network technology-based packet forwarding method. The method is applied to a computer system. The computer system includes a bus switch, a plurality of processors, and a plurality of NICs. The method includes: A first processor in the plurality of processors generates a packet; the bus switch obtains the packet generated by the first processor; the bus switch determines that a destination IP address of the packet is an IP address of a first NIC in the plurality of NICs; and the bus switch forwards the packet to a second processor according to a routing rule, where the second processor is a processor that is in the plurality of processors and that corresponds to the first NIC. For steps performed by the bus switch, refer to descriptions corresponding to FIG. 5. Details are not described herein again.

For example, an embodiment of this application further provides a bus network technology-based packet forwarding method. The method is applied to a computer system. The computer system includes a bus switch, a plurality of processors, and a plurality of NICs. The method includes: A first processor in the plurality of processors generates a packet; a second NIC in the plurality of NICs obtains the packet generated by the first processor, where the first processor corresponds to the second NIC; the second NIC determines that a destination IP address of the packet is an IP address of a first NIC in the plurality of NICs; and the second NIC sends the packet, to enable the bus switch to forward the packet to a second processor according to a routing rule, where the second processor is a processor that is in the plurality of processors and that corresponds to the first NIC. For steps performed by the second NIC, refer to the foregoing descriptions corresponding to FIG. 7. Details are not described herein again.

For example, an embodiment of this application further provides a bus network technology-based packet forwarding method. The method is applied to a computer system. The computer system includes a bus switch, a plurality of processors, and a plurality of NICs. The method includes: A first processor in the plurality of processors generates a packet, determines that a destination IP address of the packet is an IP address of a first NIC in the plurality of NICs, and sends the packet, to enable the bus switch to forward the packet to a second processor according to a routing rule, where the second processor is a processor that is in the plurality of processors and that corresponds to the first NIC. For steps performed by the first processor, refer to the foregoing descriptions corresponding to FIG. 9. Details are not described herein again.

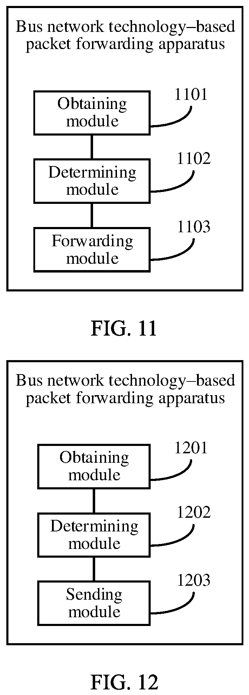

The foregoing describes the bus network technology-based packet forwarding method provided in embodiments of this application. Corresponding to the foregoing method, an embodiment of this application further provides a bus network technology-based packet forwarding apparatus. The apparatus is used in a virtual switch. The apparatus is configured to perform, by using modules shown in FIG. 11, the bus network technology-based packet forwarding method shown in FIG. 5. As shown in FIG. 11, the bus network technology-based packet forwarding apparatus provided in an embodiment of this application includes the following modules:
an obtaining module 1101, configured to obtain a packet generated by a first processor in a plurality of processors;
an determining module 1102, configured to determine that a destination internet protocol IP address of the packet is an IP address of a first NIC in a plurality of NICs; and
a forwarding module 1103, configured to forward the packet to a second processor according to a routing rule, where the second processor is a processor that is in the plurality of processors and that corresponds to the first NIC.

In a possible implementation, the routing rule includes a correspondence between the destination IP address of the packet and the second processor. The forwarding module 1103 is configured to forward the packet to the second processor based on the correspondence included in the routing rule.

In a possible implementation, the routing rule includes a correspondence between the destination IP address of the packet and the first NIC. The forwarding module 1103 is configured to forward the packet to the first NIC based on the correspondence included in the routing rule, to forward the packet to the second processor via the first NIC.

In a possible implementation, the destination IP address of the packet is a virtual destination IP address.

In a possible implementation, the IP address of the first NIC is a physical IP address. The determining module 1102 is configured to: if the destination IP address of the packet is the virtual destination IP address, convert the virtual destination IP address of the packet into a physical destination IP address of the packet; and determine that the physical destination IP address of the packet is the physical IP address of the first NIC in the plurality of NICs.

In a possible implementation, the bus switch includes a virtual switch. The determining module 1102 is configured to determine, via the virtual switch, that the destination IP address of the packet is the IP address of the first NIC in the plurality of NICs.

In a possible implementation, the determining module 1102 is further configured to determine that the destination IP address of the packet is an IP address other than an IP address of any NIC in the plurality of NICs; and the forwarding module 1103 is further configured to forward the packet to an upper-level switch connected to the plurality of NICs.

Corresponding to the foregoing method, an embodiment of this application further provides a bus network technology-based packet forwarding apparatus. The apparatus is used in a bus switch. The apparatus is configured to perform, by using modules shown in FIG. 12, the bus network technology-based packet forwarding method shown in FIG. 7. As shown in FIG. 12, the bus network technology-based packet forwarding apparatus provided in an embodiment of this application includes the following modules:
an obtaining module 1201, configured to obtain a packet generated by a first processor in a plurality of processors, where the first processor corresponds to a second NIC;
an determining module 1202, configured to determine that a destination internet protocol IP address of the packet is an IP address of a first NIC in a plurality of NICs; and
a sending module 1203, configured to send the packet, to enable the bus switch to forward the packet to a second processor according to a routing rule, where the second processor is a processor that is in the plurality of processors and that corresponds to the first NIC.

In a possible implementation, the routing rule includes a correspondence between the destination IP address of the packet and the second processor, and the routing rule is used by the bus switch to forward the packet to the second processor based on the correspondence.

In a possible implementation, the routing rule includes a correspondence between the destination IP address of the packet and the first NIC, and the routing rule is used by the bus switch to forward the packet to the first NIC based on the correspondence, to forward the packet to the second processor via the first NIC.

In a possible implementation, the destination IP address of the packet is a virtual destination IP address.

In a possible implementation, the IP address of the first NIC is a physical IP address.

The determining module 1202 is configured to: if the destination IP address of the packet is the virtual destination IP address, convert the virtual destination IP address of the packet into a physical destination IP address of the packet; and determine that the physical destination IP address of the packet is the physical IP address of the first NIC in the plurality of NICs.

In a possible implementation, the second NIC includes a virtual switch.

The determining module 1202 is configured to determine, via the virtual switch, that the destination IP address of the packet is the IP address of the first NIC in the plurality of NICs.

In a possible implementation, the determining module 1202 is further configured to determine that the destination IP address of the packet is an IP address other than an IP address of any NIC in the plurality of NICs; and the sending module 1203 is further configured to forward the packet to an upper-level switch connected to the plurality of NICs.

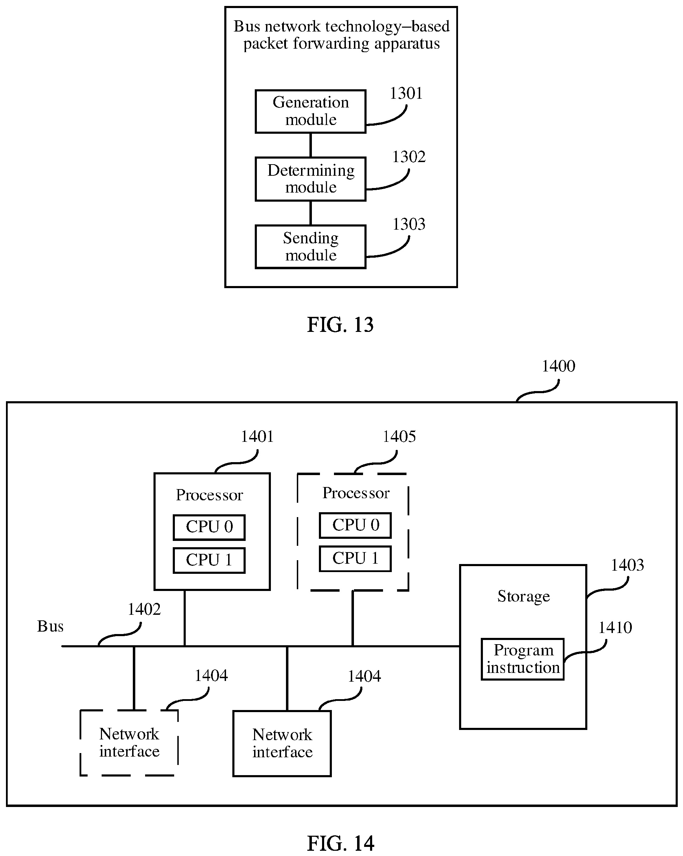

Corresponding to the foregoing method, an embodiment of this application further provides a bus network technology-based packet forwarding apparatus. The apparatus is used in a bus switch. The apparatus is configured to perform, by using modules shown in FIG. 13, the bus network technology-based packet forwarding method shown in FIG. 9. As shown in FIG. 13, the bus network technology-based packet forwarding apparatus provided in an embodiment of this application includes the following modules:
a generation module 1301, configured to generate a packet;
a determining module 1302, configured to determine that a destination IP address of the packet is an IP address of a first NIC in a plurality of NICs; and
a sending module 1303, configured to send the packet, to enable the bus switch to forward the packet to a second processor according to a routing rule, where the second processor is a processor that is in a plurality of processors and that corresponds to the first NIC.

In a possible implementation, the routing rule includes a correspondence between the destination IP address of the packet and the second processor, and the routing rule is used by the bus switch to directly forward the packet to the second processor based on the correspondence.

In a possible implementation, the routing rule includes a correspondence between the destination IP address of the packet and the first NIC, and the routing rule is used by the bus switch to forward the packet to the first NIC based on the correspondence, to forward the packet to the second processor via the first NIC.

In a possible implementation, the destination IP address of the packet is a virtual destination IP address.

In a possible implementation, the IP address of the first NIC is a physical IP address. The determining module 1302 is configured to: if the destination IP address of the packet is the virtual destination IP address, convert the virtual destination IP address of the packet into a physical destination IP address of the packet; and determine that the physical destination IP address of the packet is the physical IP address of the first NIC in the plurality of NICs.

In a possible implementation, a first processor includes a virtual switch. The determining module 1302 is configured to determine, via the virtual switch, that the destination IP address of the packet is the IP address of the first NIC in the plurality of NICs.

In a possible implementation, the determining module 1302 is further configured to determine that the destination IP address of the packet is an IP address other than an IP address of any NIC in the plurality of NICs; and the sending module 1303 is further configured to forward the packet to an upper-level switch connected to the plurality of NICs.

It should be understood that when the apparatuses shown in FIG. 11, FIG. 12, and FIG. 13 implement functions of the apparatuses, beneficial effects of the apparatuses are the same as beneficial effects of the methods shown in FIG. 5, FIG. 7, and FIG. 9. When the apparatuses provided in FIG. 11, FIG. 12, and FIG. 13 implement the functions of the apparatuses, division into the foregoing functional modules is merely used as an example for description. In actual application, the foregoing functions may be allocated and implemented by different functional modules based on requirements, that is, an internal structure of a device is divided into different functional modules, to implement all or some of the foregoing described functions. In addition, the apparatuses provided in the foregoing embodiments and the method embodiments pertain to a same concept. For specific implementation processes of the apparatuses, refer to the method embodiments. Details are not described herein again.

FIG. 14 is a diagram of a structure of an example of a bus network technology-based packet forwarding device 1400 according to this application. The bus network technology-based packet forwarding device 1400 includes at least one processor 1401, a storage 1403, and at least one network interface 1404.

The processor 1401 is, for example, a general-purpose central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor or one or more integrated circuits or application-specific integrated circuits (application-specific integrated circuits, ASICs) configured to implement the solutions in this application, a programmable logic device (programmable logic device, PLD), another general-purpose processor or another programmable logic device, a discrete gate, a transistor logic device, a discrete hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The general-purpose processor may be a microprocessor, any conventional processor, or the like. It should be noted that the processor may be a processor that supports an advanced reduced instruction set computer machines (advanced RISC machines, ARM) architecture. The processor may implement or execute various logical blocks, modules, and circuits described with reference to content disclosed in this application. Alternatively, the processor may be a combination of processors implementing a computing function, for example, a combination including one or more microprocessors, or a combination of the DSP and the microprocessor.

Optionally, the bus network technology-based packet forwarding device 1400 further includes a bus 1402. The bus 1402 is configured to transfer information between components of the bus network technology-based packet forwarding device 1400. The bus 1402 may be a peripheral component interconnect (peripheral component interconnect, PCI for short) bus, an extended industry standard architecture (extended industry standard architecture, EISA for short) bus, or the like. The bus 1402 may be classified into an address bus, a data bus, a control bus, and the like. For ease of representation, only one line is for representing the bus in FIG. 14, but this does not mean that there is only one bus or only one type of bus.

The storage 1403 is, for example, a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

By way of example, but not limitation, many forms of ROMs and RAMs are available. For example, the ROM is a compact disc read-only memory (compact disc read-only memory, CD-ROM). The RAM includes but is not limited to a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

Alternatively, the storage 1403 may be another type of storage device that can store static information and instructions. Alternatively, the storage 1403 may be another type of dynamic storage device that can store information and instructions. Alternatively, the storage 1403 may be other compact disc storage, optical disc storage (including a compact disc, a laser disc, an optical disc, a digital versatile disc, a Blu-ray disc, and the like), a magnetic disk storage medium, or another magnetic storage device, or any other medium that can be used to carry or store expected program code in a form of instructions or a data structure and that can be accessed by a computer, but is not limited thereto. For example, the storage 1403 exists independently, and is connected to the processor 1401 through the bus 1402. Alternatively, the storage 1403 may be integrated with the processor 1401.

The network interface 1404 is configured to communicate with another device or a communication network through any transceiver-like apparatus. The communication network may be an Ethernet, a radio access network (radio access network, RAN), a wireless local area network (wireless local area network, WLAN), or the like. The network interface 1404 may include a wired network interface, and may further include a wireless network interface. Specifically, the network interface 1404 may be an Ethernet (Ethernet) interface, for example, a fast Ethernet (fast Ethernet, FE) interface, a gigabit Ethernet (gigabit Ethernet, GE) interface, an asynchronous transfer mode (asynchronous transfer mode, ATM) interface, a WLAN interface, a cellular network interface, or a combination thereof. The Ethernet interface may be an optical interface, an electrical interface, or a combination thereof. In some implementations of this application, the network interface 1404 may be configured to communicate with another device by the bus network technology-based packet forwarding device 1400.

In specific implementation, in some implementations, the processor 1401 may include one or more CPUs, for example, a CPU 0 and a CPU 1 shown in FIG. 14. Each of the processors may be a single-core processor or a multi-core processor. The processor herein may be one or more devices, circuits, and/or processing cores configured to process data (for example, computer program instructions).

In specific implementation, in some implementations, the bus network technology-based packet forwarding device 1400 may include a plurality of processors, for example, the processor 1401 and a processor 1405 shown in FIG. 14. Each of the processors may be a single-core processor or a multi-core processor. The processor herein may be one or more devices, circuits, and/or processing cores configured to process data (for example, computer program instructions).

In some implementation, the storage 1403 is configured to store program instructions 1410 for executing the solutions of this application, and the processor 1401 may execute the program instructions 1410 stored in the storage 1403. That is, the bus network technology-based packet forwarding device 1400 may implement, by using the processor 1401 and the program instructions 1410 in the storage 1403, the method provided in the method embodiment, that is, the method shown in FIG. 5, FIG. 7, or FIG. 9. The program instructions 1410 may include one or more software modules. Optionally, the processor 1401 may also store the program instructions for executing the solutions in this application.

In a specific implementation process, the bus network technology-based packet forwarding device 1400 in this application may correspond to a virtual switch or a bus switch configured to perform the foregoing methods. The processor 1401 in the bus network technology-based packet forwarding device 1400 reads instructions in the storage 1403, so that the bus network technology-based packet forwarding device 1400 shown in FIG. 14 can perform all or some steps in the method embodiments.

The bus network technology-based packet forwarding device 1400 may further correspond to the apparatus shown in FIG. 11, FIG. 12, or FIG. 13. Each functional module in the apparatus shown in FIG. 11, FIG. 12, or FIG. 13 is implemented by using software of the bus network technology-based packet forwarding device 1400. In other words, the functional modules included in the apparatus shown in FIG. 11, FIG. 12, or FIG. 13 are generated after the processor 1401 of the bus network technology-based packet forwarding device 1400 reads the program instructions 1410 stored in the storage 1403.

That is, the steps of the method shown in FIG. 5, FIG. 7, or FIG. 9 are completed by using an integrated logic circuit of hardware in the processor of the bus network technology-based packet forwarding device 1400, or by using instructions in a form of software. The steps in the method embodiments disclosed with reference to this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in a storage, and the processor reads information in the storage, and completes the steps in the method embodiments in combination with hardware of the processor. To avoid repetition, details are not described herein again.

In an example embodiment, a computer system is provided. The computer system includes a bus switch, a plurality of processors, and a plurality of NICs. A first processor in the plurality of processors is configured to generate a packet. The bus switch is configured to obtain the packet generated by the first processor, determine that a destination internet protocol IP address of the packet is an IP address of a first NIC in the plurality of NICs, and forward the packet to a second processor according to a routing rule. The second processor is a processor that is in the plurality of processors and that corresponds to the first NIC. For such a computer system, refer to the descriptions corresponding to FIG. 5.

In an example embodiment, another computer system is provided. The computer system includes a bus switch, a plurality of processors, and a plurality of NICs. A first processor in the plurality of processors is configured to generate a packet. A second NIC in the plurality of NICs is configured to obtain the packet generated by the first processor, where the first processor corresponds to the second NIC, determine that a destination internet protocol IP address of the packet is an IP address of a first NIC in the plurality of NICs, and send the packet, to enable the bus switch to forward the packet to the second processor according to a routing rule. The second processor is a processor that is in the plurality of processors and that corresponds to the first NIC. For such a computer system, refer to the descriptions corresponding to FIG. 7.

In an example embodiment, another computer system is provided. The computer system includes a bus switch, a plurality of processors, and a plurality of NICs. A first processor in the plurality of processors is configured to generate a packet, determine that a destination IP address of the packet is an IP address of a first NIC in the plurality of NICs, and send the packet, to enable the bus switch to forward the packet to a second processor according to a routing rule. The second processor is a processor that is in the plurality of processors and that corresponds to the first NIC. For such a computer system, refer to the descriptions corresponding to FIG. 9.

In an example embodiment, a bus switch is provided. The bus switch is configured to implement the bus network technology-based packet forwarding method shown in FIG. 5.

In an example embodiment, a network interface card, that is, a NIC, is provided. The network interface card is configured to implement the bus network technology-based packet forwarding method shown in FIG. 7.

In an example embodiment, a processor is provided. The processor is configured to implement the bus network technology-based packet forwarding method shown in FIG. 9.

In an example embodiment, an embodiment of this application provides a bus network technology-based packet forwarding device. The device includes a storage and a processor. The storage stores at least one computer instruction, and the at least one computer instruction is loaded and executed by the processor, to enable the bus network technology-based packet forwarding device to implement the bus network technology-based packet forwarding method shown in FIG. 5, FIG. 7, or FIG. 9. For example, the bus network technology-based packet forwarding device includes but is not limited to a bus switch.

In an example embodiment, an embodiment of this application provides a computer program or a computer program product. The computer program or the computer program product includes computer instructions. When the computer instructions are run by a computer, the computer is enabled to perform the bus network technology-based packet forwarding method shown in FIG. 5, FIG. 7, or FIG. 9.

For example, an embodiment of this application provides a computer-readable storage medium. The computer-readable storage medium stores computer instructions. When the computer instructions are run on a computer, the bus network technology-based packet forwarding method shown in FIG. 5, FIG. 7, or FIG. 9 is performed by the computer.

For example, an embodiment of this application provides a chip, including a processor, configured to invoke, from a storage, and run instructions stored in the storage, to enable a computer in which the chip is installed to perform the bus network technology-based packet forwarding method shown in FIG. 5, FIG. 7, or FIG. 9.

In an example embodiment, an embodiment of this application provides another chip, including an input interface, an output interface, a processor, and a storage. The input interface, the output interface, the processor, and the storage are connected by using an internal connection path. The processor is configured to execute code in the storage. When the code is executed, a computer in which the chip is installed performs the bus network technology-based packet forwarding method shown in FIG. 5, FIG. 7, or FIG. 9.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, DVD), a semiconductor medium (for example, a solid-state drive (solid-state drive)), or the like.

In this application, terms such as "first" and "second" are used to distinguish between same items or similar items that have basically same functions. It should be understood that there is no logical or time sequence dependency between "first", "second", and "n^{th}", and a quantity and an execution sequence are not limited. It should be further understood that, although the following descriptions use terms such as "first" and "second" to describe various elements, these elements shall not be limited by the terms. These terms are simply used to distinguish one element from another.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of' in this application means two or more. For example, a plurality of processors mean two or more processors. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of various examples and the appended claims are also intended to include plural forms, unless otherwise specified in the context clearly.

It should further be understood that the term "and/or" used in this specification indicates and includes any or all possible combinations of one or more of the associated listed items. The term "and/or" describes an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should be further understood that the term "if' may be interpreted as a meaning of "when" ("when" or "upon") or "in response to determining" or "in response to detecting". Similarly, according to the context, the phrase "if it is determined that" or "if [a stated condition or event] is detected" may be interpreted as a meaning of "when it is determined that" or "in response to determining" or "when [a stated condition or event] is detected" or "in response to detecting [a stated condition or event]".

The foregoing descriptions are embodiments of this application, but are not intended to limit this application. Any modification, equivalent replacement, improvement, or the like made without departing from the principle of this application should fall within the protection scope of this application.

## Claims

1. A bus network technology-based packet forwarding method, wherein the method is applied to a bus switch in a computer system, the computer system further comprises a plurality of processors and a plurality of network interface card NICs, the bus switch is connected to the plurality of processors, the bus switch is further connected to the plurality of NICs, and the method comprises:
obtaining a packet generated by a first processor in the plurality of processors;
determining that a destination internet protocol IP address of the packet is an IP address of a first NIC in the plurality of NICs; and
forwarding the packet to a second processor according to a routing rule, wherein the second processor is a processor that is in the plurality of processors and that corresponds to the first NIC.

2. The method according to claim 1, wherein the routing rule comprises a correspondence between the destination IP address of the packet and the second processor; and
the forwarding the packet to the second processor according to the routing rule comprises:
forwarding the packet to the second processor based on the correspondence comprised in the routing rule.

3. The method according to claim 1, wherein the routing rule comprises a correspondence between the destination IP address of the packet and the first NIC; and
the forwarding the packet to the second processor according to the routing rule comprises:
forwarding the packet to the first NIC based on the correspondence comprised in the routing rule, to forward the packet to the second processor via the first NIC.

4. The method according to any one of claims 1 to 3, wherein the destination IP address of the packet is a virtual destination IP address.

5. The method according to any one of claims 1 to 4, wherein the IP address of the first NIC is a physical IP address; and
the determining that the destination internet protocol IP address of the packet is the IP address of the first NIC in the plurality of NICs comprises:
if the destination IP address of the packet is the virtual destination IP address, converting the virtual destination IP address of the packet into a physical destination IP address of the packet; and
determining that the physical destination IP address of the packet is the physical IP address of the first NIC in the plurality of NICs.

6. The method according to any one of claims 1 to 4, wherein the bus switch comprises a virtual switch; and
the determining that the destination internet protocol IP address of the packet is the IP address of the first NIC in the plurality of NICs comprises:
determining, via the virtual switch, that the destination IP address of the packet is the IP address of the first NIC in the plurality of NICs.

7. The method according to any one of claims 1 to 6, wherein the method further comprises:
determining that the destination IP address of the packet is an IP address other than an IP address of any NIC in the plurality of NICs, and forwarding the packet to an upper-level switch connected to the plurality of NICs.

8. A bus network technology-based packet forwarding method, wherein the method is applied to a second NIC in a plurality of network interface card NICs in a computer system, the computer system further comprises a bus switch and a plurality of processors, the plurality of NICs are connected to the bus switch, the bus switch is further connected to the plurality of processors, and the method comprises:
obtaining a packet generated by a first processor in the plurality of processors, wherein the first processor corresponds to the second NIC;
determining that a destination internet protocol IP address of the packet is an IP address of a first NIC in the plurality of NICs; and
sending the packet, to enable the bus switch to forward the packet to a second processor according to a routing rule, wherein the second processor is a processor that is in the plurality of processors and that corresponds to the first NIC.

9. The method according to claim 8, wherein the routing rule comprises a correspondence between the destination IP address of the packet and the second processor, and the routing rule is used by the bus switch to forward the packet to the second processor based on the correspondence.

10. The method according to claim 8, wherein the routing rule comprises a correspondence between the destination IP address of the packet and the first NIC, and the routing rule is used by the bus switch to forward the packet to the first NIC based on the correspondence, to forward the packet to the second processor via the first NIC.

11. The method according to any one of claims 8 to 10, wherein the destination IP address of the packet is a virtual destination IP address.

12. The method according to any one of claims 8 to 11, wherein the IP address of the first NIC is a physical IP address; and
the determining that the destination internet protocol IP address of the packet is the IP address of the first NIC in the plurality of NICs comprises:
if the destination IP address of the packet is the virtual destination IP address, converting the virtual destination IP address of the packet into a physical destination IP address of the packet; and
determining that the physical destination IP address of the packet is the physical IP address of the first NIC in the plurality of NICs.

13. The method according to any one of claims 8 to 11, wherein the second NIC comprises a virtual switch;
the determining that the destination internet protocol IP address of the packet is the IP address of the first NIC in the plurality of NICs comprises:
determining, via the virtual switch, that the destination IP address of the packet is the IP address of the first NIC in the plurality of NICs.

14. The method according to any one of claims 8 to 13, wherein the method further comprises:
determining that the destination IP address of the packet is an IP address other than an IP address of any NIC in the plurality of NICs, and forwarding the packet to an upper-level switch connected to the plurality of NICs.

15. A bus network technology-based packet forwarding method, wherein the method is applied to a computer system, the computer system comprises a bus switch, a plurality of processors, and a plurality of network interface card NICs, and the method comprises:
generating, by a first processor in the plurality of processors, a packet;
obtaining, by the bus switch, the packet generated by the first processor;
determining, by the bus switch, that a destination internet protocol IP address of the packet is an IP address of a first NIC in the plurality of NICs; and
forwarding, by the bus switch, the packet to a second processor according to a routing rule, wherein the second processor is a processor that is in the plurality of processors and that corresponds to the first NIC.

16. A bus network technology-based packet forwarding method, wherein the method is applied to a computer system, the computer system comprises a bus switch, a plurality of processors, and a plurality of network interface card NICs, and the method comprises:
generating, by a first processor in the plurality of processors, a packet;
obtaining, by a second NIC in the plurality of NICs, the packet generated by the first processor, wherein the first processor corresponds to the second NIC;
determining, by the second NIC, that a destination internet protocol IP address of the packet is an IP address of a first NIC in the plurality of NICs; and
sending, by the second NIC, the packet, to enable the bus switch to forward the packet to a second processor according to a routing rule, wherein the second processor is a processor that is in the plurality of processors and that corresponds to the first NIC.

17. A bus network technology-based packet forwarding apparatus, wherein the apparatus is used in a bus switch in a computer system, the computer system further comprises a plurality of processors and a plurality of network interface card NICs, the bus switch is connected to the plurality of processors, the bus switch is further connected to the plurality of NICs, and the apparatus comprises:
an obtaining module, configured to obtain a packet generated by a first processor in the plurality of processors;
a determining module, configured to determine that a destination internet protocol IP address of the packet is an IP address of a first NIC in the plurality of NICs; and
a forwarding module, configured to forward the packet to a second processor according to a routing rule, wherein the second processor is a processor that is in the plurality of processors and that corresponds to the first NIC.

18. The apparatus according to claim 17, wherein the routing rule comprises a correspondence between the destination IP address of the packet and the second processor; and
the forwarding module is configured to forward the packet to the second processor based on the correspondence comprised in the routing rule.

19. The apparatus according to claim 17, wherein the routing rule comprises a correspondence between the destination IP address of the packet and the first NIC; and
the forwarding module is configured to forward the packet to the first NIC based on the correspondence comprised in the routing rule, to forward the packet to the second processor via the first NIC.

20. The apparatus according to any one of claims 17 to 19, wherein the destination IP address of the packet is a virtual destination IP address.

21. The apparatus according to any one of claims 17 to 20, wherein the IP address of the first NIC is a physical IP address; and
the determining module is configured to: if the destination IP address of the packet is the virtual destination IP address, convert the virtual destination IP address of the packet into a physical destination IP address of the packet; and determine that the physical destination IP address of the packet is the physical IP address of the first NIC in the plurality of NICs.

22. The apparatus according to any one of claims 17 to 20, wherein the bus switch comprises a virtual switch; and
the determining module is configured to determine, via the virtual switch, that the destination IP address of the packet is the IP address of the first NIC in the plurality of NICs.

23. The apparatus according to any one of claims 17 to 22, wherein the determining module is further configured to determine that the destination IP address of the packet is an IP address other than an IP address of any NIC in the plurality of NICs; and
the forwarding module is further configured to forward the packet to an upper-level switch connected to the plurality of NICs.

24. A bus network technology-based packet forwarding apparatus, wherein the apparatus is used in a second NIC in a plurality of network interface card NICs in a computer system, the computer system further comprises a bus switch and a plurality of processors, the plurality of NICs are connected to the bus switch, the bus switch is further connected to the plurality of processors, and the apparatus comprises:
an obtaining module, configured to obtain a packet generated by a first processor in the plurality of processors, wherein the first processor corresponds to the second NIC;
a determining module, configured to determine that a destination internet protocol IP address of the packet is an IP address of a first NIC in the plurality of NICs; and
a sending module, configured to send the packet, to enable the bus switch to forward the packet to a second processor according to a routing rule, wherein the second processor is a processor that is in the plurality of processors and that corresponds to the first NIC.

25. The apparatus according to claim 24, wherein the routing rule comprises a correspondence between the destination IP address of the packet and the second processor, and the routing rule is used by the bus switch to forward the packet to the second processor based on the correspondence.

26. The apparatus according to claim 24, wherein the routing rule comprises a correspondence between the destination IP address of the packet and the first NIC, and the routing rule is used by the bus switch to forward the packet to the first NIC based on the correspondence, to forward the packet to the second processor via the first NIC.

27. The apparatus according to any one of claims 24 to 26, wherein the destination IP address of the packet is a virtual destination IP address.

28. The apparatus according to any one of claims 24 to 27, wherein the IP address of the first NIC is a physical IP address; and
the determining module is configured to: if the destination IP address of the packet is the virtual destination IP address, convert the virtual destination IP address of the packet into a physical destination IP address of the packet; and determine that the physical destination IP address of the packet is the physical IP address of the first NIC in the plurality of NICs.

29. The apparatus according to any one of claims 24 to 27, wherein the second NIC comprises a virtual switch;
the determining module is configured to determine, via the virtual switch, that the destination IP address of the packet is the IP address of the first NIC in the plurality of NICs.

30. The apparatus according to any one of claims 24 to 29, wherein the determining module is further configured to determine that the destination IP address of the packet is an IP address other than an IP address of any NIC in the plurality of NICs; and
the sending module is further configured to forward the packet to an upper-level switch connected to the plurality of NICs.

31. A bus switch, wherein the bus switch is configured to perform the bus network technology-based packet forwarding method according to any one of claims 1 to 7.

32. A network interface card, wherein the network interface card is configured to perform the bus network technology-based packet forwarding method according to any one of claims 8 to 14.

33. A computer-readable storage medium, wherein the computer-readable storage medium stores at least one computer instruction, and the at least one computer instruction is loaded and executed by a processor, to enable a computer to implement the bus network technology-based packet forwarding method according to any one of claims 1 to 14.

34. A computer program product, wherein the computer program product comprises computer instructions, and the computer instructions are executed by a processor, to enable a computer to implement the bus network technology-based packet forwarding method according to any one of claims 1 to 14.
